# EUROPEAN PATENT APPLICATION

(11) **EP 4 607 814 A1**
(43) Date of publication of application: **27.08.2025**
(21) Application number: 23879846.6
(22) Date of filing: 19.10.2023
(51) Int. Cl.: H04B 7/06, H04W 16/28, H04W 72/1268, H04W 72/20

(54) **TERMINAL, WIRELESS COMMUNICATION METHOD, AND BASE STATION**

(30) Priority: 20.10.2022 JP 2022168370
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/037792
(87) International publication number: WO 2024/085203

(57) **Abstract**

A terminal according to one aspect of the present disclosure includes: a receiving section that receives downlink control information for scheduling an uplink shared channel involving a plurality of repetitions using a same frequency resource and a same time resource; and a control section that determines a combination of a plurality of demodulation reference signal (DMRS) ports, based on the downlink control information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency, and the like (Non-Patent Literature 1). In addition, for the purpose of further high capacity, advancement, and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and the like) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, Rel-18 NR), it is being considered to increase the number of demodulation reference signal (DMRS) ports for an uplink shared channel (physical uplink shared channel (PUSCH)). New DMRS ports, which are different from these existing DMRS ports (also called Rel-15 DMRS ports), are also call Rel-18 DMRS ports.

However, it is not clear how to indicate the new DMRS ports. When an indication method is not clear, throughput may decrease.

In view of this, an object of the present disclosure is to provide a terminal, a radio communication method, and a base station that can appropriately use new DMRS ports.

A terminal according to one aspect of the present disclosure includes: a receiving section that receives downlink control information for scheduling an uplink shared channel involving a plurality of repetitions using a same frequency resource and a same time resource; and a control section that determines a combination of a plurality of demodulation reference signal (DMRS) ports, based on the downlink control information.

### Advantageous Effects of Invention

According to an aspect of the present disclosure, it is possible to appropriately use new DMRS ports.

### Brief Description of Drawings

[FIG. 1] FIG. 1 is a diagram to show an example of an association between a codebook subset and a TPMI index.
[FIG. 2] FIG. 2 is a diagram to show an example of a table of precoding matrix W for two layers (rank 2) using four antenna ports when transform precoding is disabled in Rel-16 NR.
[FIG. 3] FIGS. 3A to 3C are each a diagram to show an example of simultaneous UL transmission schemes 1 to 3 using multiple panels.
[FIG. 4] FIGS. 4A to 4C are each a diagram to show an example of a PUSCH transmission scheme.
[FIG. 5] FIGS. 5A to 5C are each a diagram to show another example of a PUSCH transmission scheme.
[FIG. 6] FIG. 6 is a diagram to show an example of an existing DMRS port table for DMRS configuration type 1.
[FIG. 7] FIG. 7 is a diagram to show an example of an existing DMRS port table for DMRS configuration type 2.
[FIG. 8] FIG. 8 is a diagram to show an example of an antenna port indication table for PDSCH.
[FIG. 9] FIGS. 9A to 9D are each a diagram to show an example of an FD-OCC with a length of 4/6.
[FIG. 10] FIG. 10 is a diagram to show an example of an FD-OCC with a length of 4.
[FIG. 11] FIG. 11 is a diagram to show a first example of a new DMRS port table for DMRS configuration type 1.
[FIG. 12] FIG. 12 is a diagram to show a second example of a new DMRS port table for DMRS configuration type 1.
[FIG. 13] FIG. 13 is a diagram to show a third example of a new DMRS port table for DMRS configuration type 1.
[FIG. 14] FIG. 14 is a diagram to show an example of a new DMRS port table for DMRS configuration type 2.
[FIG. 15] FIGS. 15A and 15B are each a diagram to show an example of a plurality of antenna port indication tables for a plurality of antenna coherence assumptions.
[FIG. 16] FIG. 16 is a diagram to show an example of a common antenna port indication table for a plurality of antenna coherence assumptions.
[FIG. 17] FIGS. 17A to 17D are each a diagram to show an example of a table of antenna ports to be referenced when a transform precoder is disabled and when DMRS type = 1 and DMRS maximum length = 2.
[FIG. 18] FIGS. 18A and 18B are each a diagram to show an example of a table of antenna ports to be referenced when a transform precoder is disabled and when DMRS type = 2 and DMRS maximum length = 1.
[FIG. 19] FIGS. 19A to 19D are each a diagram to show an example of a table of antenna ports to be referenced when a transform precoder is disabled and when DMRS type = 2 and DMRS maximum length = 2.
[FIG. 20] FIG. 20 is a diagram to show an example of an antenna port indication table to be referenced when a transform precoder is disabled and when DMRS type = 1, DMRS maximum length = 1, and rank = 5 according to Embodiment #2-1.
[FIG. 21] FIG. 21 is a diagram to show an example of an antenna port indication table to be referenced when a transform precoder is disabled and when DMRS type = 1, DMRS maximum length = 1, and rank = 6 according to Embodiment #2-1.
[FIG. 22] FIG. 22 is a diagram to show an example of an antenna port indication table to be referenced when a transform precoder is disabled and when DMRS type = 1, DMRS maximum length = 1, and rank = 7 according to Embodiment #2-1.
[FIG. 23] FIG. 23 is a diagram to show an example of an antenna port indication table to be referenced when a transform precoder is disabled and when DMRS type = 1, DMRS maximum length = 1, and rank = 8 according to Embodiment #2-1.
[FIG. 24] FIG. 24 is a diagram to show an example of an antenna port indication table to be referenced when a transform precoder is disabled and when DMRS type = 2, DMRS maximum length = 1, and rank = 5 according to Embodiment #2-1.
[FIG. 25] FIG. 25 is a diagram to show an example of an antenna port indication table to be referenced when a transform precoder is disabled and when DMRS type = 2, DMRS maximum length = 1, and rank = 6 according to Embodiment #2-1.
[FIG. 26] FIG. 26 is a diagram to show an example of an antenna port indication table to be referenced when a transform precoder is disabled and when DMRS type = 2, DMRS maximum length = 1, and rank = 7 according to Embodiment #2-1.
[FIG. 27] FIG. 27 is a diagram to show an example of an antenna port indication table to be referenced when a transform precoder is disabled and when DMRS type = 2, DMRS maximum length = 1, and rank = 8 according to Embodiment #2-1.
[FIG. 28] FIG. 28 is a diagram to show an example of an antenna port indication table to be referenced when a transform precoder is disabled and when DMRS type = 1, DMRS maximum length = 2, and rank = 5.
[FIG. 29] FIG. 29 is a diagram to show an example of an antenna port indication table to be referenced when a transform precoder is disabled and when DMRS type = 1, DMRS maximum length = 2, and rank = 6.
[FIG. 30] FIG. 30 is a diagram to show an example of an antenna port indication table to be referenced when a transform precoder is disabled and when DMRS type = 1, DMRS maximum length = 2, and rank = 7.
[FIG. 31] FIG. 31 is a diagram to show an example of an antenna port indication table to be referenced when a transform precoder is disabled and when DMRS type = 1, DMRS maximum length = 2, and rank = 8.
[FIG. 32] FIGS. 32A and 32B are each a diagram to show an example of switching of an antenna port indication table according to Embodiment #4.
[FIG. 33] FIG. 33 is a diagram to show an example of a size of an antenna port field in Rel. 17.
[FIG. 34] FIGS. 34A and 34B are each a diagram to show an example of an antenna port field of Option 5-2 according to Embodiment #5.
[FIG. 35] FIG. 35 is a diagram to show an example of a schematic structure of a radio communication system according to one embodiment.
[FIG. 36] FIG. 36 is a diagram to show an example of a structure of a base station according to one embodiment.
[FIG. 37] FIG. 37 is a diagram to show an example of a structure of a user terminal according to one embodiment.
[FIG. 38] FIG. 38 is a diagram to show an example of a hardware structure of the base station and the user terminal according to one embodiment.
[FIG. 39] FIG. 39 is a diagram to show an example of a vehicle according to one embodiment.

### Description of Embodiments

### (Control of Transmission of SRS and PUSCH)

In Rel-15 NR, a terminal (user terminal, user equipment (UE)) may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any of periodic SRS (P-SRS), semi-persistent SRS (SP-SRS), and aperiodic CSI (aperiodic SRS (A-SRS)). Note that the UE may periodically (or after activation, periodically) transmit a P-SRS and an SP-SRS, and may transmit an A-SRS, based on an SRS request of downlink control information (DCI).

The usage (RRC parameter "usage," L1 (Layer-1) parameter "SRS-SetUse") may be, for example, beam management (beamManagement), codebook (CB), non-codebook (noncodebook (NCB)), antenna switching, or the like. An SRS with codebook or non-codebook usage may be used to determine a precoder for codebook-based or non-codebook based uplink shared channel (Physical Uplink Shared Channel (PUSCH)) transmission based on an SRI.

For example, in a case of codebook-based transmission, the UE may determine a precoder (precoding matrix) for the PUSCH transmission, based on an SRI, a transmission rank (which may be referred to simply as a rank), and a transmitted precoding matrix indicator (TPMI). In a case of non-codebook-based transmission, the UE may determine a precoder for the PUSCH transmission, based on the SRI.

The SRS resource information may include an SRS resource ID (SRS-ResourceId), the number of SRS ports, an SRS port number(s), transmission comb, SRS resource mapping (for example, a time and/or frequency resource location, a resource offset, resource periodicity, the number of repetitions, the number of SRS symbols, an SRS bandwidth, and the like), hopping related information, an SRS resource type, a sequence ID, spatial relationship information of the SRS, and the like.

The spatial relation information (for example, an RRC information element "spatialRelationInfo") of the SRS may indicate spatial relation information between a certain reference signal and the SRS. The certain reference signal may be at least one of a synchronization signal/broadcast channel (synchronization signal/physical broadcast channel (SS/PBCH)) block, a channel state information reference signal (channel state information reference signal (CSI-RS)), and an SRS (for example, another SRS). The SS/PBCH block may be referred to as a synchronization signal block (SSB).

The spatial relationship information of the SRS may include at least one of an SSB index, a CSI-RS resource ID, and an SRS resource ID as the index of the certain reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relationship information of the SRS may include a serving cell index, a BWP index (BWP ID), and the like corresponding to the certain reference signal.

When the UE is configured with the spatial relationship information related to the SSB or the CSI-RS and the SRS for a given SRS resource, the UE may transmit the SRS resource by using the same spatial domain filter (spatial domain transmission filter) as the spatial domain filter (spatial domain reception filter) for receiving the SSB or the CSI-RS. In this case, the UE may assume that a UE receive beam of the SSB or the CSI-RS and a UE transmit beam of the SRS are the same.

When the UE is configured with spatial relationship information related to another SRS (reference SRS) and the SRS (target SRS) for a given SRS (target SRS) resource, the UE may transmit the target SRS resource by using the same spatial domain filter (spatial domain transmission filter) as the spatial domain filter (spatial domain transmission filter) for transmission of the reference SRS. In other words, in this case, the UE may assume that a UE transmit beam of the reference SRS and a UE transmit beam of the target SRS are the same.

The UE may determine the spatial relationship of a PUSCH scheduled by DCI, based on the value of a certain field (for example, an SRS resource indicator (SRI) field) in the DCI (for example, DCI format 0_1). In other words, the UE may use the spatial relation information (for example, an RRC information element "spatialRelationInfo") of the SRS resource determined based on the value of the certain field (for example, the SRI) for the PUSCH transmission.

In Rel-15/16 NR, when codebook-based transmission is used for a PUSCH, the UE may be configured with an SRS resource set with codebbook usage with up to two SRS resources by RRC and may be indicated with one of the up to two SRS resources by DCI (1-bit SRI field). A transmit beam of the PUSCH is specified by the SRI field.

The UE may determine a TPMI and the number of layers (transmission rank) for the PUSCH, based on the precoding information and number of layers field (also referred to as a precoding information field below). The UE may select a precoder, based on the TPMI, the number of layers, and the like from a codebook for uplink for the same number of ports as the number of SRS ports indicated by a higher layer parameter "nrofSRS-Ports" configured for the SRS resource specified by the SRI field.

In Rel-15/16 NR, when non-codebook-based transmission is used for a PUSCH, the UE may be configured with an SRS resource set including up to four SRS resources with non-codebook usage, by RRC, and may be indicated with one or more of the up to four SRS resources by DCI (two-bit SRI field).

The UE may determine the number of layers (transmission rank) for the PUSCH, based on the SRI field. For example, the UE may judge that the number of SRS resources indicated by the SRI field is the same as the number of layers for the PUSCH. The UE may calculate a precoder for the SRS resource.

When a CSI-RS related to the SRS resource (or SRS resource set to which the SRS resource belongs) (which may be referred to as an associated CSI-RS) is configured in a higher layer, a transmit beam for the PUSCH may be calculated based on (measurement of) the configured related CSI-RS. Otherwise, a transmit beam for the PUSCH may be specified by an SRI.

Note that the UE may be configured with whether to use codebook-based PUSCH transmission or use non-codebook-based PUSCH transmission by a higher layer parameter "txConfig" indicating a transmission scheme. The parameter may indicate a value of "codebook" or "non-codebook (nonCodebook)."

In the present disclosure, a codebook based PUSCH (codebook based PUSCH transmission, codebook based transmission) may mean a PUSCH when the UE is configured with "codebook" as a transmission scheme. In the present disclosure, a non-codebook based PUSCH (non-codebook based PUSCH transmission, non-codebook based transmission) may mean a PUSCH when the UE is configured with "non-codebook" as a transmission scheme.

### (Determination of PUSCH Precoder in Codebook (CB)-based Transmission)

As described above, in a case of codebook (CB)-based transmission, the UE may determine a precoder for PUSCH transmission, based on an SRI, a TRI, a TPMI, or the like.

The UE may be notified of the SRI, the TRI, the TPMI, or the like by using downlink control information (DCI). The SRI may be specified by an SRS resource indicator field (SRI field) of the DCI or may be specified by a parameter "srs-ResourceIndicator" included in an RRC information element "ConfiguredGrantConfig" for a configured grant PUSCH.

The TRI and the TPMI may be specified by the precoding information and number of layers field ("Precoding information and number of layers" field) of the DCI. The precoding information and number of layers field is also referred to as a precoding information field for simplicity.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence," for example).

The UE may determine a precoder to be used for the PUSCH transmission, based on precoder type information (for example, an RRC parameter "codebookSubset") included in PUSCH configuration information notified by higher layer signaling (for example, an information element "PUSCH-Config" of RRC signaling). The UE may be configured with a subset of the PMI specified by the TPMI, by codebookSubset.

Note that the precoder type may be specified by any of or a combination of at least two of full coherent (fully coherent), partial coherent, and non-coherent (non coherent) (which may be indicated, for example, by a parameter such as "fullyAndPartialAndNonCoherent" or "partialAndNonCoherent").

For example, the RRC parameter "pusch-TransCoherence" indicating a UE capability may indicate full coherent (fullCoherent), partial coherent (partialCoherent), or non-coherent (nonCoherent). The RRC parameter "codebookSubset" may indicate "fullyAndPartialAndNonCoherent)," "partialAndNonCoherent," or "nonCoherent."

The full coherent may mean that all antenna ports used for transmission are synchronized (which may be expressed as being able to be co-phased , phase control being possible for each coherent antenna port, a precoder being able to be appropriately applied for each coherent antenna port, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

In the present disclosure, a precoder type, coherency, PUSCH transmission coherence, a coherent type, a coherence type, a codebook type, a codebook subset, a codebook subset type, a UE antenna coherent type, antenna coherence assumption, an antenna coherence state, and antenna coherency may be read interchangeably.

The UE may determine a precoding matrix corresponding to the TPMI index obtained from DCI for scheduling UL transmission (for example, DCI format 0_1, the same applies below), from a plurality of precoders (which may be referred to as a precoding matrix, a codebook, and the like) for CB based transmission.

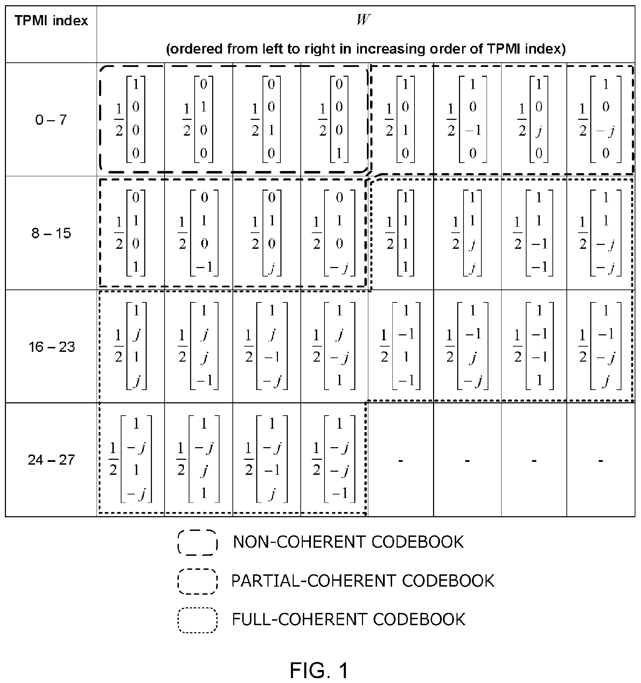

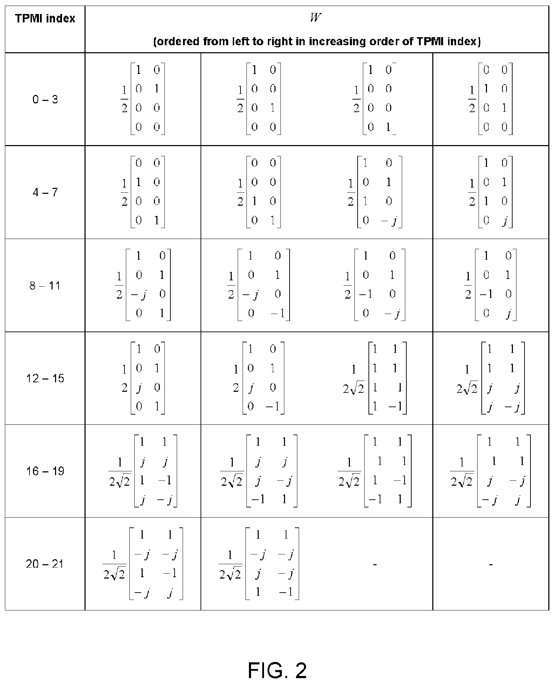

FIG. 1 is a diagram to show an example of association between codebook subsets and TPMI indices. FIG. 1 corresponds to a table of precoding matrices W for single-layer (rank 1) transmission using four antenna ports in a case where transform precoding (which may be referred to as a transform precoder) is disabled in Rel-16 NR. FIG. 1 shows corresponding W in ascending order of TPMI indices from left to right (the same applies to FIG. 2).

The correspondence (which may also be referred to as a table) indicating the TPMI indices and the corresponding W as shown in FIG. 1 is also referred to as a codebook. A part of this codebook is also referred to as a codebook subset.

In FIG. 1, when the codebook subset (codebookSubset) is of fullyAndPartialAndNonCoherent, the UE is notified of a TPMI (TPMI index) of any of 0 to 27 for single-layer transmission. When the codebook subset is of partialAndNonCoherent, the UE is configured with a TPMI of any of 0 to 11 for single-layer transmission. When the codebook subset is of nonCoherent, the UE is configured with a TPMI of any of 0 to 3 for single-layer transmission.

In FIG. 1, when a TPMI of 0 to 3 is notified, a non-coherent precoder is applied. When a TPMI of 4 to 11 is notified, a partially coherent precoder is applied. When a TPMI of 12 to 27 is notified, a fully coherent precoder is applied.

FIG. 2 corresponds to a table of precoding matrices W for two-layer (rank 2) transmission using four antenna ports when transform precoding is disabled in Rel-16 NR.

According to FIG. 2, a TPMI of which the UE is notified for two-layer transmission is 0 to 21 (codebook subset being of fullyAndPartialAndNonCoherent), 0 to 13 (codebook subset being of partialAndNonCoherent), or 0 to 5 (codebook subset being of nonCoherent) .

Note that a precoding matrix in which only one element is not 0 for each column may be referred to as a non-coherent codebook. A precoding matrix in which a specific number (greater than one, but not the number corresponding to all the elements in each column) of elements are not 0 for each column may be referred to as a partial-coherent codebook. A precoding matrix in which all the elements are not 0 for each column may be referred to as a full-coherent codebook.

The non-coherent codebook and the partially coherent codebook may be referred to as an antenna selection precoder, an antenna port selection precoder, and the like. For example, the non-coherent codebook (non-coherent precoder) may be referred to as a 1-port selection precoder, a 1-port port selection precoder, and the like. The partial-coherent codebook (partial coherent precoder) may be referred to as an x-port (x is an integer greater than one) selection precoder, an x-port port selection precoder, and the like. The full-coherent codebook may be referred to as a non-antenna selection precoder, an all-port precoder, and the like.

Note that, in the present disclosure, a partial-coherent codebook may correspond to codebooks (precoding matrices) obtained by a UE configured with a partial-coherent codebook subset (for example, an RRC parameter "codebookSubset" = "partialAndNonCoherent") excluding codebooks corresponding to TPMIs specified to a UE configured with a non-coherent codebook subset (for example, an RRC parameter "codebookSubset" = "nonCoherent") from codebooks corresponding to TPMIs specified by DCI for codebook-based transmission (specifically, in 4-antenna-port single-layer transmission, codebooks for TPMIs of 4 to 11 (TPMI = 4 to 11)).

Note that, in the present disclosure, a full-coherent codebook may correspond to codebooks (precoding matrices) obtained by a UE configured with a full-coherent codebook subset (for example, an RRC parameter "codebookSubset" = "fullyAndPartialAndNonCoherent") excluding codebooks corresponding to TPMIs specified to a UE configured with a partial-coherent codebook subset (for example, an RRC parameter "codebookSubset" = "partialAndNonCoherent") from codebooks corresponding to TPMIs specified by DCI for codebook-based transmission (specifically, in 4-antenna-port single-layer transmission, codebooks for TPMIs of 12 to 27 (TPMI = 12 to 27)).

In Rel. 18, in 8Tx (PUSCH with a rank greater than 4), at least one of the following UE antenna coherent types is under study.
- Full coherent
- Partial coherent
- Non-coherent

A DMRS port table suitable for an antenna configuration may be defined.

It is studied that the number Ng of antenna coherent groups (UE antenna groups) is any of 1, 2, and 4. The UE assumes that the antenna ports in the Ng antenna coherent groups are coherent, and the other antenna ports are non-coherent. In a case of Ng = 1, it may be assumed to be full coherent.

### (Multi-Panel Transmission)

In Rel. 18 or later versions, in order to improve UL throughput/reliability, supporting of simultaneous UL transmission using multiple panels (for example, simultaneous multi-panel UL transmission (SiMPUL)) for one or more TRPs is under study. A multi-panel UL transmission scheme is also under study for a certain UL channel (for example, a PUSCH/PUCCH) and the like.

For example, up to X (for example, X = 2) and up to Y (for example, Y = 2) panels may be supported for multi-panel UL transmission. In multi-panel UL transmission, when UL precoding indication for a PUSCH is supported, a codebook of an existing system (for example, Rel. 16 or earlier versions) may be supported for multi-panel simultaneous transmission. In consideration of single-DCI and multi-DCI based multi-TRP operations, the number of layers may be up to x (for example, x = 4) for all the panels, and the number of codewords (CWs) may be up to y (for example, y = 2) for all the panels.

As a multi-panel UL transmission scheme or a multi-panel UL transmission scheme candidate, at least one of schemes 1 to 3 below (multi-panel UL transmission schemes 1 to 3) is under study. Only one of transmission schemes 1 to 3 may be supported. A plurality of schemes including at least one of transmission schemes 1 to 3 are supported, and one of the plurality of transmission schemes may be configured for the UE.

### <Transmission Scheme 1: Coherent Multi-panel UL Transmission>

Multiple panels may be synchronized with each other. All layers are mapped to all the panels. Multiple analog beams are indicated. An SRS resource indicator (SRI) field may be enhanced. This scheme may use up to four layers for UL.

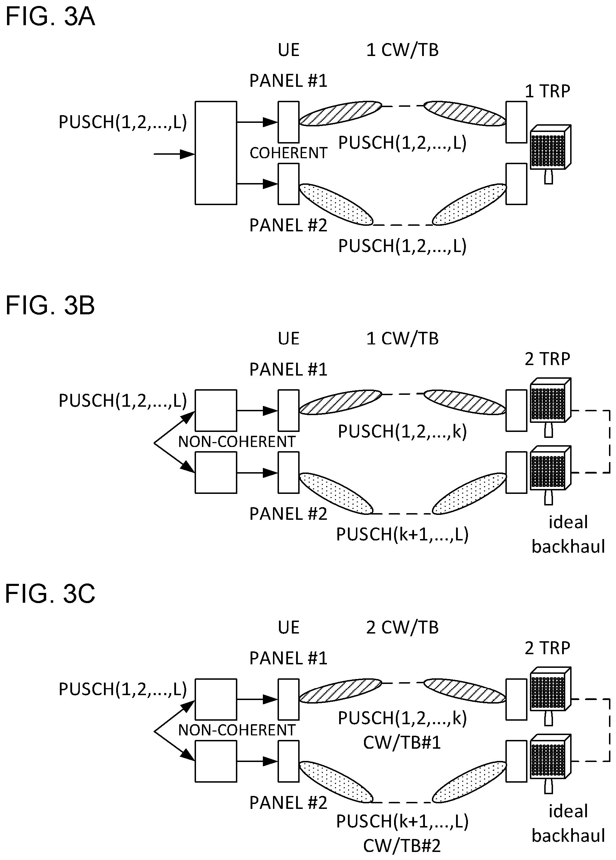

In the example of FIG. 3A, a UE maps one codeword (CW) or one transport block (TB) to L layers (PUSCHs (1, 2,..., L)) and transmits the L layers from each of the two panels. Panel #1 and panel #2 are coherent. Transmission scheme 1 can obtain gain by diversity. The total number of layers in the two panels is 2L. When the maximum value of the total number of layers is four, the maximum value of the number of layers in one panel is two.

### <Transmission Scheme 2: Non-coherent Multi-Panel UL Transmission of One Codeword (CW) or Transport Block (TB)>

Multiple panels need not be synchronized. Different layers are mapped to different panels and one CW or TB for PUSCHs from multiple panels. A layer corresponding to one CW or TB may be mapped to multiple panels. This transmission scheme may use up to four layers or up to eight layers for UL. When up to eight layers are supported, this transmission scheme may support one CW or TB using up to eight layers.

In the example of FIG. 3B, a UE maps one CW or one TB to k layers (PUSCHs (1, **2,...,** k)) and (L - k) layers (PUSCHs (k + 1, k + 2,..., L)), transmits the k layers from panel #1, and transmits the (L - k) layers from panel #2. Transmission scheme 2 can obtain gain by multiplexing and diversity. The total number of layers in the two panels is L.

### <Transmission Scheme 3: Non-coherent Multi-panel UL Transmission of Two CWs or TBs>

Multiple panels need not be synchronized. Different layers are mapped to different panels and two CWs or TBs for PUSCHs from multiple panels. A layer corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In the example of FIG. 3C, a UE maps CW #1 or TB #1 to k layers (PUSCHs (1, 2,..., k)) and maps CW #2 or TB #2 to (L - k) layers (PUSCHs (k + 1, k + 2,..., L)) of two CWs or two TBs, and transmits the k layers from panel #1 and transmits the (L - k) layers from panel #2. Transmission scheme 3 can obtain gain by multiplexing and diversity. The total number of layers in the two panels is L.

In each of the above-described transmission schemes, a base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or a target RS resource set, a PUCCH, an SRS, and a PRACH. When the panel ID is explicitly notified, the panel ID may be configured in at least one of a target RS, a target channel, and a reference RS (for example, a DL RS resource configuration or spatial relationship information).

In one or more of the transmission schemes/modes described above, multi-panel UL transmission (for example, simultaneous transmission across multiple panels (STxMP)) for single DCI-based PUSCH scheduling/multi-DCI-based PUSCH scheduling is being considered.

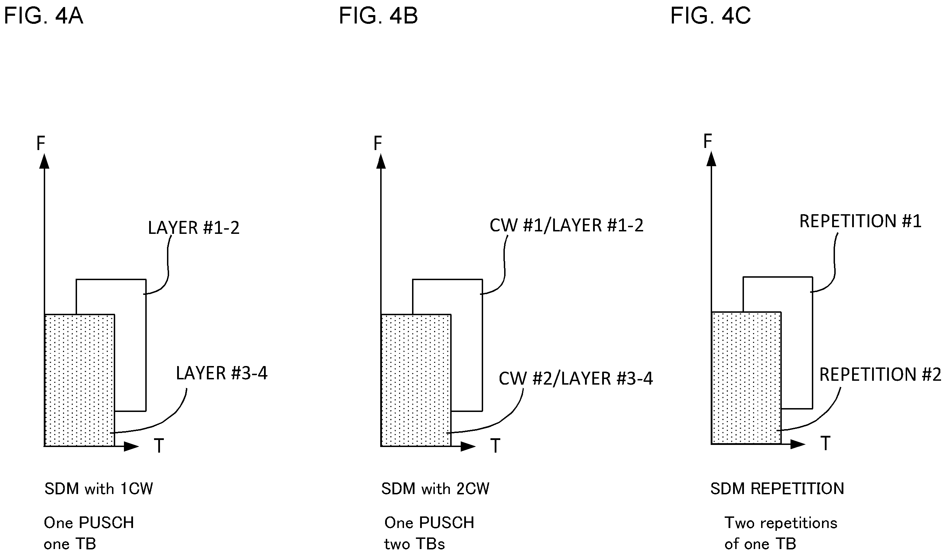

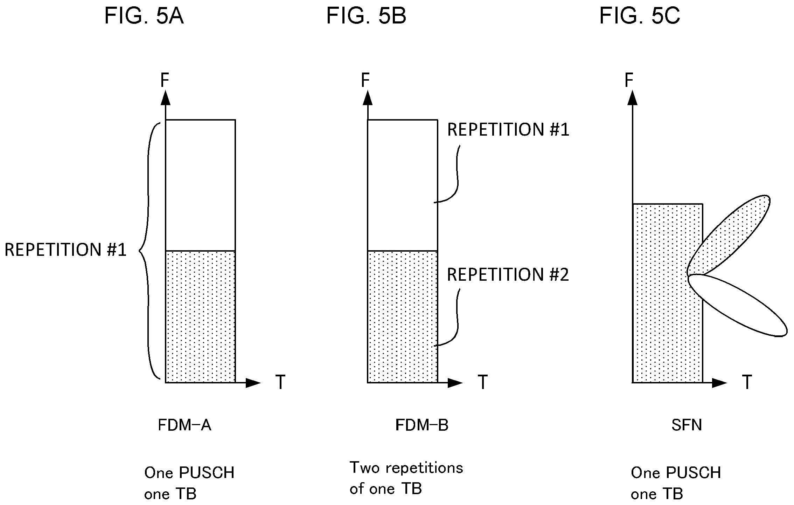

In the simultaneous transmission across multiple panels (STxMP) in a single DCI-based multi-TRP system, the following scheme may be applied to UL transmission (for example, PUSCH).
- Space division multiplexing (SDM) scheme: Different layers/DMRS ports of one PUSCH are precoded separately and transmitted simultaneously from different UE beams/panels (see Figs. 4A and 4B).
- Space division multiplexing repetition (SDM repetition) scheme: Two PUSCH transmission occasions with different redundancy versions (RVs) of the same TB are transmitted simultaneously from two different UE beams/panels on the same time and frequency resources (see FIG. 4C).
- Frequency Division Multiplexing (FDM)-A scheme: Different portions of frequency domain resources of one PUSCH transmission occasion are transmitted from different UE beams/panels (see FIG. 5A).
- FDM-B scheme: Two PUSCH transmission occasions with the same/different RV of the same TB are transmitted from different UE beams/panels on non-overlapping frequency domain resources and the same time domain resources (see FIG. 5B).
- SFN-based transmission scheme: All the same layers/DMRS ports of one PUSCH are transmitted simultaneously from two different UE beams/panels (see FIG. 5C).

Note that in the present disclosure, repetition transmission and transmission may be interchangeably interpreted. Transmitting a plurality of TBs may mean transmitting the same TB plural times or transmitting different TBs.

### [Space Division Multiplexing (SDM)]

The UE may assume that PUSCH repetition transmission to which SDM is applied are scheduled on the same time resource and the same frequency resource. In other words, when a plurality of coherent panels are used, the UE may transmit, on the same time resource and the same frequency resource, the PUSCH repetition transmission to which SDM is applied.

FIG. 4A is a diagram to show an example of repetition transmission to which SDM is applied with one CW. In this example, time and frequency resources of a layer #1-2 and a layer #3-4 corresponding to PUSCH/PUCCH are the same.

FIG. 4B is a diagram to show an example of repetition transmission to which SDM is applied with two CWs. In this example, time and frequency resources of CW #1 and CW #2 corresponding to PUSCH/PUCCH are the same.

FIG. 4C is a diagram to show an example of repetition transmission to which SDM is applied. In this example, time and frequency resources of repetition #1 and repetition #2 of PUSCH/PUCCH are the same.

Note that the PUSCH transmission (for example, PUSCH repetition transmission) to which SDM is applied may be configured such that at least a part of the time and frequency resources overlap.

### [Frequency Division Multiplexing (FDM)]

The UE may assume that PUSCH/PUCH repetition transmission to which frequency division multiplexing (FDM) is applied are scheduled on the same time resource and different frequency resources. In other words, when a plurality of coherent panels are used, the UE may transmit, on the same time resource and the different frequency resources, the PUSCH/PUCH repetition transmission to which FDM is applied.

FIG. 5A is a diagram to show a first example of repetition transmission to which FDM (FDM-A) is applied. Such a drawing shows an example in which PUSCH/PUCH repetition transmission is performed once for one TB/UCI.

FIG. 5B is a diagram to show a second example of repetition transmission to which FDM (FDM-B) is applied. Such a drawing shows an example in which PUSCH/PUCH repetition transmission is performed twice for one TB/UCI.

FIG. 5C is a diagram to show an example of repetition transmission to which a single frequency network (SFN) is applied. Such a drawing shows an example in which one PUSCH/PUCH is transmitted using different beams/panels for one TB/UCI.

### [STxMP]

SDM (transmitting separate MIMO layers from a plurality of panels) is being considered to improve UL throughput. SFN-based repetition is being considered to improve UL reliability. Such a method is effective when beams are interrupted by a disturbance at FR2.

In a single DCI-based STxMP PUSCH SDM (STxMP SDM) scheme, two SRS resource sets for CB or NCB are configured. In codebook-based PUSCH, DCI indicates two TPMI fields, each of the TMPI fields indicates precoding information and the number of layers to be transmitted across SPS ports of the SRS resource set indicated in each of the SRS resource sets, respectively. In non-codebook-based PUSCH and codebook-based PUSCH, DCI indicates two SRI fields, and each of the SRI fields indicates an SRS resource for each of the SRS resource sets.

In Rel. 18, it is considered to support an SFN-based transmission scheme for STxMP PUSCH transmission in the single DCI-based multi-TRP system.

### (DMRS)

A front-loaded DMRS is a first DMRS (first symbol or a symbol near the first symbol) for faster demodulation. An additional DMRS can be configured by RRC for high-speed moving UE or a high modulation and coding scheme (MCS)/rank. A frequency position of the additional DMRS is the same as that of the front-loaded DMRS.

For the time domain, DMRS mapping type A or B is configured. In the DMRS mapping type A, DMRS position l_0 is counted with a symbol index in the slot. l_0 is configured by an MIB or a parameter (dmrs-TypeA-Position) in a common serving cell configuration (ServingCellConfigCommon). DMRS position 0 (reference point l) means a first symbol of a slot or each frequency hop. In DMRS mapping type B, DMRS position l_0 is counted with a symbol index in a PDSCH/PUSCH. l_0 is invariably 0. DMRS position 0 (reference point l) means a first symbol of a PDSCH/PUSCH or each frequency hop.

The DMRS position is defined by a table in a specification, and is dependent upon duration of the PDSCH/PUSCH. The position of the additional DMRS is fixed.

For the frequency domain, (PDSCH/PUSCH) DMRS configuration type 1 or 2 is configured. DMRS configuration type 1 has a comb structure, and can be applied to both of Cyclic Prefix Orthogonal Frequency Division Multiplexing (CP-OFDM) and Discrete Fourier Transform Spread OFDM (DFT-s-OFDM). DMRS configuration type 2 can be applied only to CP-OFDM.

Note that the CP-OFDM may be used when transform precoding (which may be called a transform precoder) is disabled (a parameter of the transform precoder (for example, transformPrecoder) = "disabled"). The DFT-S-OFDM may be used when the transform precoder is enabled (a parameter of the transform precoder (for example, transformPrecoder) = "enabled").

A single symbol DMRS or a double symbol DMRS is configured in UE.

The single symbol DMRS is normally used (mandatory in Rel. 15). In the single symbol DMRS, the number of additional DMRSs (symbols) is {0, 1, 2, 3}. The single symbol DMRS supports both of a case in which frequency hopping is enabled and a case in which frequency hopping is disabled. If a maximum length (max Length) in an uplink DMRS configuration (DMRS-UplinkConfig) is not configured, the single symbol DMRS is used.

The double symbol DMRS is used for a larger number of DMRS ports (in particular, MU-MIMO). In the double symbol DMRS, the number of additional DMRSs (symbols) is {0, 1}. The double symbol DMRS supports a case in which frequency hopping is disabled. If a maximum length (maxLength) in the uplink DMRS configuration (DMRS-UplinkConfig) is 2 (len2), whether the single symbol DMRS is used or the double symbol DMRS is used is determined by DCI or a configured grant.

From the above, as allowance DMRS configuration patterns, the following combinations are conceivable.
- DMRS configuration type 1, DMRS mapping type A, single symbol DMRS
- DMRS configuration type 1, DMRS mapping type A, double symbol DMRS
- DMRS configuration type 1, DMRS mapping type B, single symbol DMRS
- DMRS configuration type 1, DMRS mapping type B, double symbol DMRS
- DMRS configuration type 2, DMRS mapping type A, single symbol DMRS
- DMRS configuration type 2, DMRS mapping type A, double symbol DMRS
- DMRS configuration type 2, DMRS mapping type B, single symbol DMRS
- DMRS configuration type 2, DMRS mapping type B, double symbol DMRS

A plurality of DMRS ports mapped to the same REs (time and frequency resources) are referred to as a DMRS Code Division Multiplexing (CDM) group.

For DMRS configuration type 1 and the single symbol DMRS, four DMRS ports can be used. In each DMRS CDM group, two DMRS ports are multiplexed using an FD OCC having a length of 2. Among a plurality of DMRS CDM groups (two DMRS CDM groups), two DMRS ports are multiplexed using FDM.

For DMRS configuration type 1 and the double symbol DMRS, eight DMRS ports can be used. In each DMRS CDM group, two DMRS ports are multiplexed using an FD OCC having a length of 2, and two DMRS ports are multiplexed using a TD OCC. Among a plurality of DMRS CDM groups (two DMRS CDM groups), two DMRS ports are multiplexed using FDM.

For DMRS configuration type 2 and the single symbol DMRS, six DMRS ports can be used. In each DMRS CDM group, two DMRS ports are multiplexed using an FD OCC having a length of 2. Among a plurality of DMRS CDM groups (three DMRS CDM groups), three DMRS ports are multiplexed using FDM.

For DMRS configuration type 2 and the double symbol DMRS, 12 DMRS ports can be used. In each DMRS CDM group, two DMRS ports are multiplexed using an FD OCC having a length of 2, and two DMRS ports are multiplexed using a TD OCC. Among a plurality of DMRS CDM groups (three DMRS CDM groups), three DMRS ports are multiplexed using FDM.

Here, although an example of DMRS mapping type B is described, the same also applies to the DMRS mapping type A.

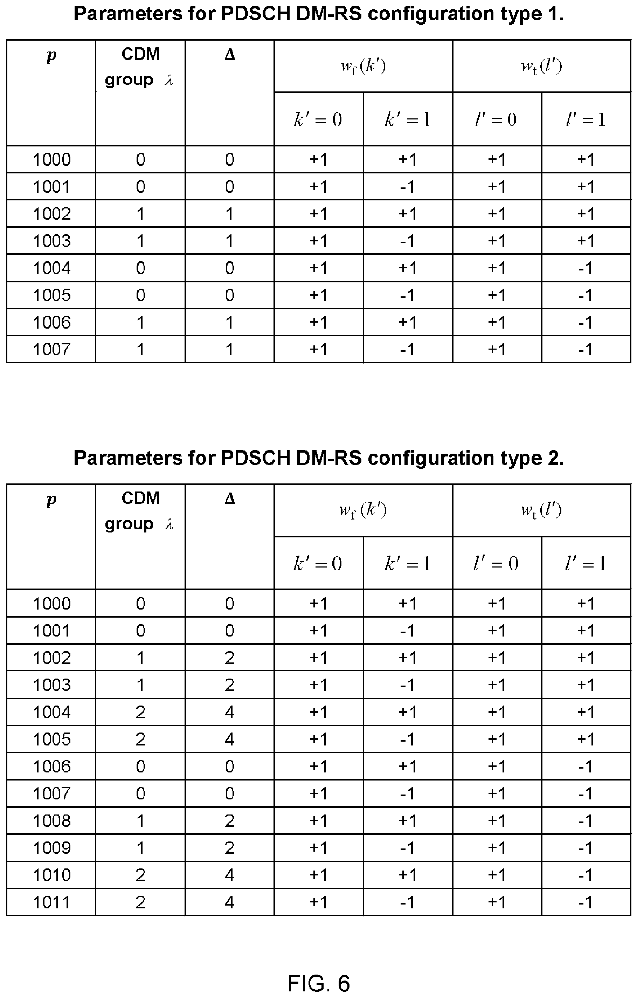

FIG. 6 is a diagram to show an example of parameters for PDSCH DMRS. DMRS ports 1000 to 1007 can be used for DMRS configuration type 1, and DMRS ports 1000 to 1011 can be used for the DMRS configuration type 2.

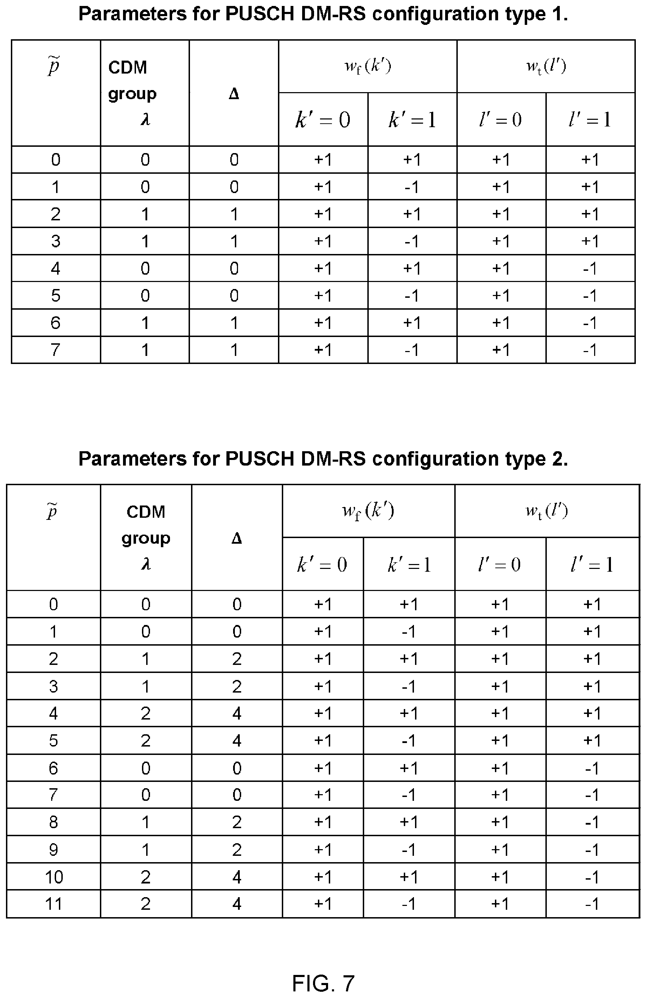

FIG. 7 is a diagram to show an example of parameters for PUSCH DMRS. DMRS ports 0 to 7 can be used for the DMRS configuration type 1, and DMRS ports 0 to 11 can be used for the DMRS configuration type 2.

### (Constraints of DMRS Port in DL Multi-TRP)

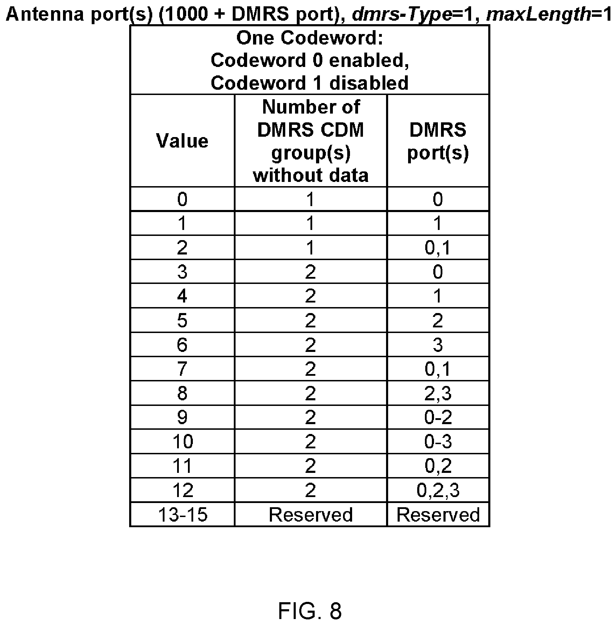

In DL multi-TRP in Rel. 16, it is instructed that a plurality of DMRS ports corresponding to separate TRPs are not in the same CDM group. This makes it possible to avoid interference between the plurality of DMRSs due to the separate TRPs with power differences when orthogonality between the plurality of DMRS ports is collapsed due to effects of frequency selective properties or the like. FIG. 8 shows an example of an antenna port indication table for PDSCH in a case of DMRS configuration type 1 and DMRS maxLength = 1. For CDM groups 0 and 1, two DMRS ports and one DMRS port, or one DMRS port and two DMRS ports can be indicated.

### (Ports of Reference Signal)

For the sake of orthogonalization of the MIMO layers or the like, a reference signal (for example, a demodulation reference signal (DMRS) or a CSI-RS) having a plurality of ports is used.

For example, regarding single user MIMO (SU-MIMO), a different DMRS port/CSI-RS port may be configured for each layer. Regarding multi user MIMO (MU-MIMO), a different DMRS port/CSI-RS port may be configured for each layer in one UE and for each UE.

Note that, when the number of CSI-RS ports having a value greater than the number of layers used for data is used, it is expected that more accurate channel state can be measured based on the CSI-RS, which contributes to improvement of throughput.

In Rel-15 NR, regarding the DMRS having a plurality of ports, through the use of frequency division multiplexing (FDM), a frequency domain orthogonal cover code (FD-OCC), a time domain OCC (TD-OCC), or the like, a maximum of eight ports are supported for a type 1 DMRS (namely, DMRS configuration type 1), and a maximum of 12 ports are supported for a type 2 DMRS (namely, DMRS configuration type 2).

In Rel-15 NR, as the FDM described above, a pattern of transmission frequency having a shape of teeth of a comb (comb-like resource set) is used. As the FD-OCC, a cyclic shift (CS) is used. The TD-OCC can only be applied to the double symbol DMRS.

The OCC according to the present disclosure may be interchangeably interpreted as an orthogonal code, orthogonalization, a cyclic shift, or the like.

Note that the type of the DMRS may be referred to as a DMRS configuration type.

Among the DMRSs, the DMRS subjected to resource mapping in the unit of consecutive (adjacent) two symbols may be referred to as a double symbol DMRS, and the DMRS subjected to resource mapping in the unit of one symbol may be referred to as a single symbol DMRS.

Both of the DMRSs may be mapped to one or more symbols per slot, according to the length of a data channel. The DMRS mapped to a start position of a data symbol may be referred to as a front-loaded DMRS, and the DMRS additionally mapped to a position other than the start position may be referred to as an additional DMRS.

In a case of DMRS configuration type 1 and the single symbol DMRS, the Comb and the CS may be used for orthogonalization. For example, up to 4 antenna ports (APs) may be supported by using two types of Combs and two types of CSs (Comb2 + 2CS).

In a case of DMRS configuration type 1 and the double symbol DMRS, the Comb, the CS, and the TD-OCC may be used for orthogonalization. For example, up to 8 APs may be supported by using two types of Combs, two types of CSs, and TD-OCCs ({1, 1} and {1, -1}).

In a case of DMRS configuration type 2 and the single symbol DMRS, the FD-OCC may be used for orthogonalization. For example, up to 6 APs may be supported by applying the orthogonal code (2-FD-OCC) to two resource elements (REs) adjacent to each other in the frequency direction.

In a case of DMRS configuration type 2 and the double symbol DMRS, the FD-OCC and the TD-OCC may be used for orthogonalization. For example, up to 12 APs may be supported by applying the orthogonal code (2-FD-OCC) to two REs adjacent in the frequency direction and applying the TD-OCC ({1, 1} and {1, -1}) to two REs adjacent in the time direction.

In Rel-15 NR, regarding the CSI-RS having a plurality of ports, a maximum of 32 ports are supported using use of FDM, time division multiplexing (TDM), a frequency domain OCC, a time domain OCC, or the like. Regarding orthogonalization of the CSI-RS as well, a method similar to that for the DMRS described above may be applied.

Incidentally, a group of DMRS ports subjected to orthogonalization by means of the FD-OCC/TD-OCC as described above is also referred to as a code division multiplexing (CDM) group.

Different CDM groups are subjected to FDM, and are thus orthogonal to each other. In contrast, in the same CDM group, orthogonality of the applied OCC may be collapsed due to channel change or the like. In this case, when a signal in the same CDM group is received with different received power, the near-far problem is caused, which may lead to a failure in securing orthogonality.

Here, the TD-OCC/FD-OCC of the DMRS according to Rel-15 NR will be described. The DMRS mapped to the resource element (RE) may correspond to a sequence, which is obtained by multiplying a parameter (which may be referred to as a sequence element or the like) wf(k') of the FD-OCC and a parameter (which may be referred to as a sequence element or the like) wt(l') of the TD-OCC on a DMRS sequence.

The TD-OCC and the FD-OCC of the DMRS according to Rel-15 NR both correspond to the OCC having a sequence length (which may be referred to as an OCC length) of 2. Thus, a possible value of each of k' and l' is 0 or 1. By multiplying the FD-OCC by units of RE, two-port DMRSs can be multiplexed by using the same time and frequency resources (two REs). When both of the FD-OCC and the TD-OCC are applied, four-port DMRSs can be multiplexed by using the same time and frequency resources (four REs).

The two existing DMRS port tables for PDSCH described above correspond to DMRS configuration type 1 and type 2, respectively. Note that p represents a number of the antenna port, and Δ represents a parameter for shifting (offsetting) the frequency resource.

For example, antenna ports 1000 and 1001 are orthogonalized using FD-OCC by applying {wf(0), wf(1)} = {+1, +1} and {wf(0), wf(1)} = {+1, -1}, respectively.

FDM is applied to antenna ports 1000 to 1001 and antenna ports 1002 to 1003 (in a case of type 2, antenna ports 1004 to 1005) by applying different values Δ. Thus, antenna ports 1000 to 1003 (or 1000 to 1005) corresponding to the single symbol DMRS are orthogonalized using the FD-OCC and FDM.

For antenna ports 1000 to 1003 and antenna ports 1004 to 1007 of type 1, {wt(0), wt(1)} = {+1, +1} and {wt(0), wt(1)} = {+1, -1} are respectively applied to perform orthogonalization using TD-OCC. Thus, the antenna ports 1000 to 1007 (or 1000 to 1011) corresponding to the double symbol DMRS are orthogonalized using FD-OCC, TD-OCC, and FDM.

For only CP-OFDM, the following are considered: defining a larger number of orthogonal DMRS ports for MU-MIMO of the DL/UL (without increasing DMRS overhead), implementing a common design between DL and UL DMRS, and doubling a maximum number of orthogonal DMRS ports for both of the single symbol DMRS and the double symbol DMRS for up to 24 orthogonal DMRS ports and each of the applicable DMRS configuration types.

In Rel. 15, Case 1 to Case 4 below can be configured.
[Case 1] Single symbol DMRS of DMRS configuration type 1 A total number of DMRS ports is 4 ports (= 2 (by comb/FDM) × 2 (achieved owing to FD OCC).
[Case 2] Double symbol DMRS of DMRS configuration type 1 A total number of DMRS ports is 8 ports (= 2 (by comb/FDM) × 2 (by FD OCC) × 2 (by TD OCC) .
[Case 3] Single symbol DMRS of DMRS configuration type 2 A total number of DMRS ports is 6 ports (= 3 (by FDM) × 2 (by FD OCC).
[Case 4] Double symbol DMRS of DMRS configuration type 2 A total number of DMRS ports is 12 ports (= 3 (by comb) × 2 (by FD OCC) × 2 (by TD OCC).

In Case 1 to Case 4 in Rel. 15, mapping between the CDM groups and the DMRS port indexes is as follows.

### [Case 1]

Four ports and two CDM groups may be available. For the PUSCH, CDM group #0 may correspond to DMRS port indexes {0, 1}, and CDM group #1 may correspond to DMRS port indexes {2, 3}. For the PDSCH, the CDM group #0 may correspond to DMRS port indexes {1000, 1001}, and the CDM group #1 may correspond to DMRS port indexes {1002, 1003}.

### [Case 2]

Eight ports and two CDM groups may be available. For the PUSCH, the CDM group #0 may correspond to DMRS port indexes {0, 1, 4, 5}, and the CDM group #1 may correspond to DMRS port indexes {2, 3, 6, 7}. For the PDSCH, the CDM group #0 may correspond to DMRS port indexes {1000, 1001, 1004, 1005}, and the CDM group #1 may correspond to DMRS port indexes {1002, 1003, 1006, 1007}.

### [Case 3]

Six ports and three CDM groups may be available. For the PUSCH, the CDM group #0 may correspond to DMRS port indexes {0, 1}, the CDM group #1 may correspond to DMRS port indexes {2, 3}, and the CDM group #2 may correspond to DMRS port indexes {4, 5}. For the PDSCH, the CDM group #0 may correspond to DMRS port indexes {1000, 1001}, the CDM group #1 may correspond to DMRS port indexes {1002, 1003}, and the CDM group #2 may correspond to DMRS port indexes {1004, 1005}.

### [Case 4]

12 ports and three CDM groups may be available. For the PUSCH, the CDM group #0 may correspond to DMRS port indexes {0, 1, 6, 7}, the CDM group #1 may correspond to DMRS port indexes {2, 3, 8, 9}, and the CDM group #2 may correspond to DMRS port indexes {4, 5, 10, 11}. For the PDSCH, the CDM group #0 may correspond to DMRS port indexes {1000, 1001, 1006, 1007}, the CDM group #1 may correspond to DMRS port indexes {1002, 1003, 1008, 1009}, and the CDM group #2 may correspond to DMRS port indexes {1004, 1005, 1010, 1011}.

In Rel. 18, it is considered to double the total number of DMRS ports to 8, 16, 12, and 24 for cases 1, 2, 3, and 4, respectively.

To increase the number of DMRS ports, the following five options (methods of increasing the number of DMRS ports) are being considered.

### <Option 1>

- Introduction of a new OCC having a length greater than that of the existing OCC (for example, 4 or 6).

In Option 1, items to be considered include a possibility of performance deterioration when a delay spread is large, a possibility of scheduling restriction, and backward compatibility.

### <Option 2>

- Use of TD-OCC on a plurality of discontinuous DMRS symbols (for example, TD-OCC on front-loaded DMRS/additional DMRS).

In Option 2, items to be considered include a possibility of performance deterioration when the UE speed is fast, a possibility of scheduling restriction (e.g.: a method of applying frequency hopping), a possibility of restriction on DMRS configuration (e.g.: restriction on the number of additional DMRSs), and backward compatibility.

### <Option 3>

- Increase the number of CDM groups (for example, increase the number of comb/FDMs).

In Option 3, items to be considered include a possibility of performance deterioration when a delay spread is large and backward compatibility.

### <Option 4>

- Increase the number of orthogonal DMRS ports reusing the symbols for the additional DMRSs.

In Option 4, items to be considered include a possibility of performance deterioration when the UE speed is fast, a possibility of restriction on DMRS configuration (e.g.: restriction on the number of additional DMRSs), and backward compatibility.

### <Option 5>

- Use of TD-OCC (reuse of additional DMRS symbols to improve channel estimation performance) on a plurality of discontinuous DMRS symbols in combination with FD-OCC/FDM.

In Option 5, items to be considered include a possibility of performance deterioration when the UE speed is fast, a possibility of scheduling restriction (e.g.: a method of applying frequency hopping), a possibility of restriction on DMRS configuration (e.g.: restriction on the number of additional DMRSs), and backward compatibility.

In Option 1, a new FD-OCC for DMRS of PDSCH/PUSCH may follow at least one of the following options for the new DMRS configuration type 1.
<<Option 1-1>> A new FD-OCC with a length of 6 is applied to 6 REs of DMRS in one PRB within one CDM group.
<<Option 1-2>> A new FD-OCC with a length of 4 is applied to 4 REs of DMRS in one PRB or across a plurality of continuous PRBs within one CDM group.

In Option 1, regarding the new FD-OCC for DMRS of PDSCH/PUSCH, the new FD-OCC with a length of 4 is applied to 4 REs of DMRS in one PRB within one CDM group for new DMRS configuration type 2. The new FD-OCC with a length of 6 may be supported for the new DMRS configuration type 2.

In the present disclosure, the existing FD-OCC #0 may be [+1 +1], and the existing FD-OCC #1 may be [+1 -1].

The new FD-OCC may be any of several OCCs as follows.

### [OCC-a]

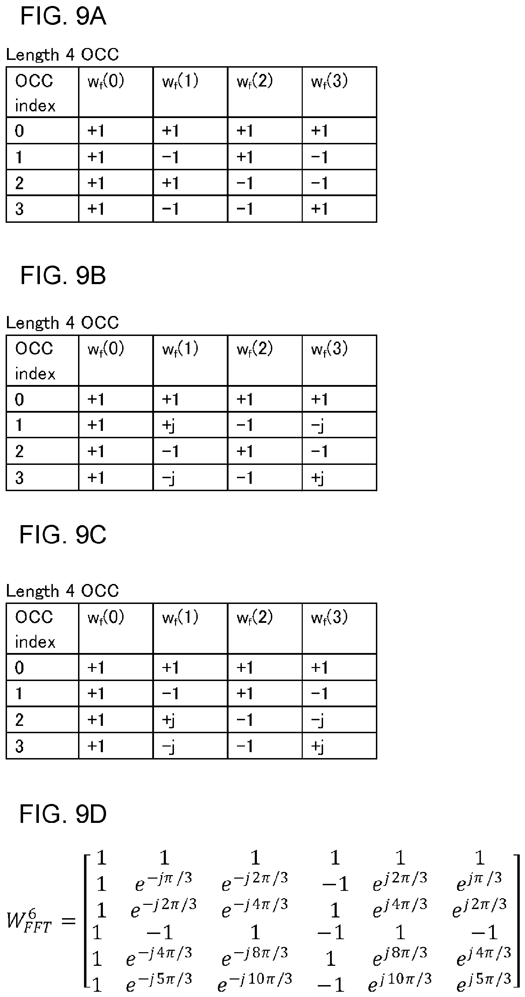

A length-4 OCC based on 4 rows and 4 columns Walsh matrix (sequence). As in an example of FIG. 9A, four sequences are obtained for OCC indexes i (= {0, 1, 2, and 3}.

### [OCC-b]

A length-4 OCC based on cyclic shifts. As in an example of FIG. 9B, four sequences are obtained for OCC indexes i (= {0, 1, 2, and 3} using cyclic shifts {i·0, i·π/2, i·π, i·3π/2}.

### [OCC-c]

OCC in which the OCC indexes 1 and 2 in the OCC-b are replaced as in an example of FIG. 9C.

### [OCC-d]

A length-6 OCC based on FFT (DFT). As in an example of FIG. 9D, six sequences are obtained from each row of a DFT matrix for OCC indexes i (= {0, 1, 2, 3, 4, 5}.

### [OCC-e]

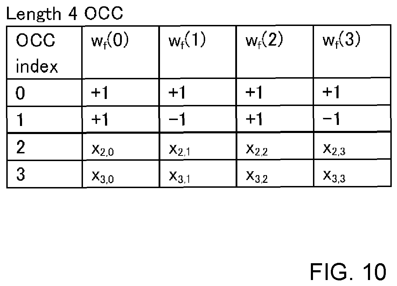

A length-4 OCC formed by repetition of the length-2 OCC (existing FD-OCC) like the OCC-a and the OCC-c. As in an example of FIG. 10, the first half and the second half of length-4 OCCs #0 and #1 (OCCs corresponding to OCC indexes 0 and 1) are the same as those of length-2 OCCs #0 and #1 (OCCs corresponding to OCC indexes 0 and 1).

In the present disclosure, OCC (FD-OCC/TD-OCC) corresponding to OCC index i may be referred to OCC #i.

Some of a plurality of sequences of the new FD-OCC may be associated with existing DMRS port indexes.

When a length-2 FD-OCC is used, the existing DMRS port table may be used.

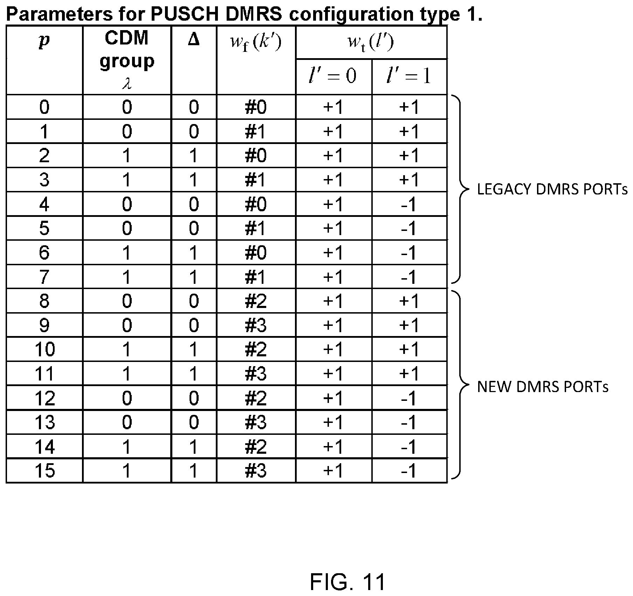

When the new FD-OCC is the OCC-e, a new DMRS port table for the DMRS configuration type 1 may be a DMRS port table shown in FIG. 11. The new DMRS port table may represent a DMRS port (p being 0 or greater) corresponding to the new FD-OCC. At least some of values of p in the new DMRS port table may overlap with values of p in the existing DMRS port table. When the use of the new FD-OCC is configured/indicated, the UE may use the new DMRS port table, and the use of the new FD-OCC is not configured/indicated, the UE may use the existing DMRS port table. As in this example, for DMRS ports with new FD-OCCs #0 and #1, the same DMRS port indexes (0 to 7 for the existing DMRS port, the DMRS configuration type 1) as those of the existing DMRS port may be used. For DMRS ports with new FD-OCCs #2 and #3, different DMRS port indexes (8 to 15 for the existing DMRS port, the DMRS configuration type 1) from those of the existing DMRS port may be used.

Some of a plurality of sequences of the new FD-OCC may not be associated with the existing DMRS port indexes.

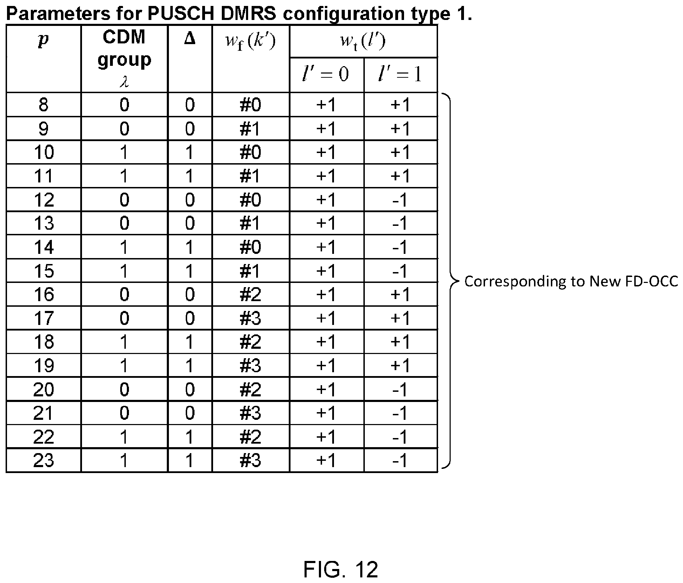

As in an example of FIG. 12, a new DMRS port table may represent only the DMRS ports corresponding to the new FD-OCC. The DMRS port indexes corresponding to the new FD-OCC may not overlap with the DMRS port indexes corresponding to the existing FD-OCC.

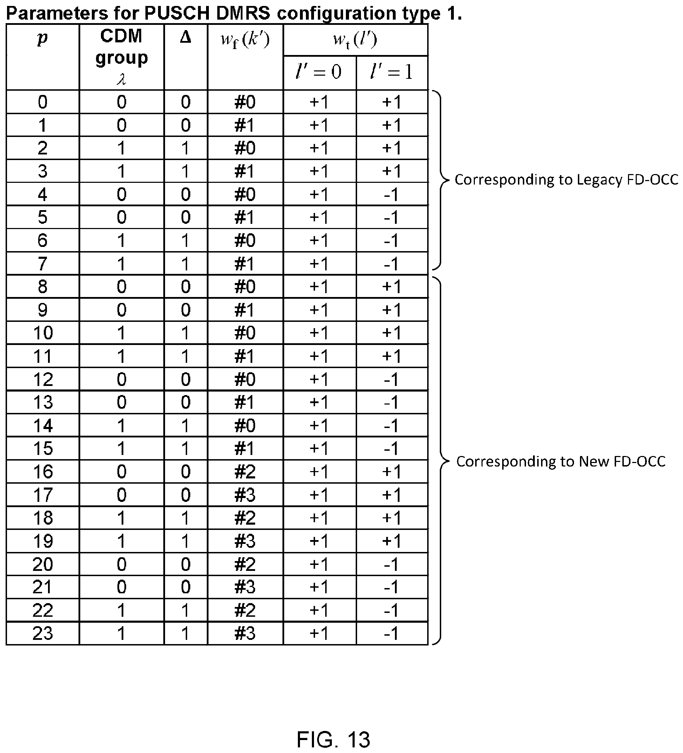

As in an example of FIG. 13, a new DMRS port table may include DMRS ports corresponding to the existing FD-OCC and DMRS ports corresponding to the new FD-OCC. In the new DMRS port table, the DMRS port indexes corresponding to the new FD-OCC may be added next to the DMRS port indexes corresponding to the existing FD-OCC.

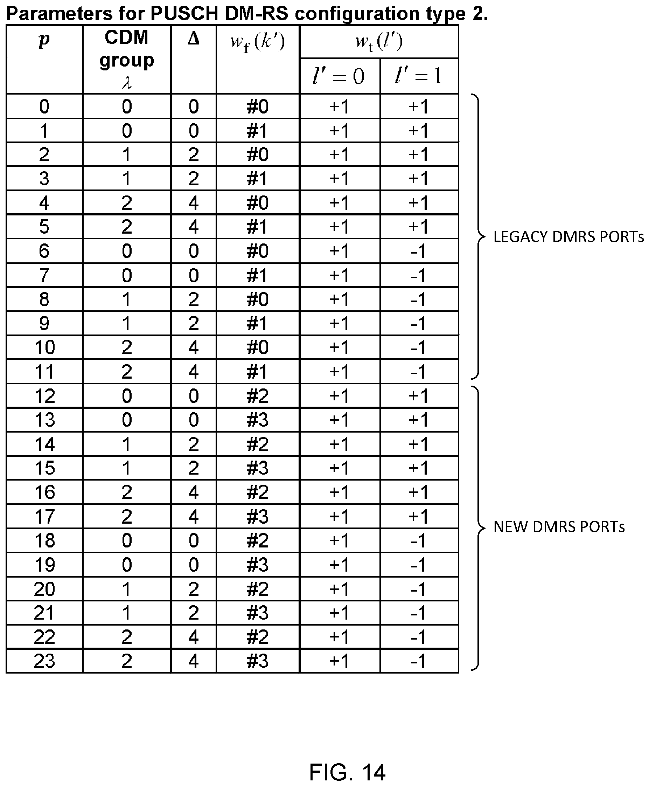

When the new FD-OCC is the OCC-e, the new DMRS port table for DMRS configuration type 2 may be a DMRS port table in FIG. 14, or may follow the same rules as those in Figs. 12 and 13.

### (Analysis)

As described above, DMRS ports capable of coping with the number of layers greater than four are considered for Rel-18 NR. In addition, it is being considered for Rel-18 NR to increase the number of orthogonal DMRS ports for PUSCH/PDSCH. Such new DMRS ports different from the existing DMRS ports (also called Rel-15 DMRS ports) are also called Rel-18 DMRS ports, enlarged DMRS ports, or the like.

The maximum number of ports for DMRS type = 1 and single symbol DMRS may be increased from 4 in Rel-15 DMRS to 8 in Rel-18 DMRS.

The maximum number of ports for DMRS type = 1 and double symbol DMRS may be increased from 8 in Rel-15 DMRS to 16 in Rel-18 DMRS.

The maximum number of ports for DMRS type = 2 and single symbol DMRS may be increased from 6 in Rel-15 DMRS to 12 in Rel-18 DMRS.

The maximum number of ports for DMRS type = 2 and double symbol DMRS may be increased from 12 in Rel-15 DMRS to 24 in Rel-18 DMRS.

Such an increase in the number of DMRS ports may be achieved using at least one of the following:
- Enlargement of·FD-OCC: using an OCC length (for example, 4 or 6) greater than an OCC length (= 2) in Rel. 15,
- Enlargement of TD-OCC: using TD-OCC over discontinuous DMRS symbols (for example, TD-OCC over front-loaded DMRS/additional DMRS),
- Sparse frequency allocation: increasing the number of CDM groups (for example, increasing combs/FDMs), and
- Using DMRS symbols subjected to·TDM: using/reusing additional DMRS symbols to increase orthogonal DMRS ports.

For PUSCH with more than four layers, it is considered that a new antenna port indication table for ranks 5/6/7/8 is supported for each of single symbol DMRS and double symbol DMRS.

An antenna port indication table for Rel-15 DMRS ports for DMRS configuration type 1/DMRS configuration type 2 may follow at least one of the following choices.
[Choice 1-1] For at least one of fully coherent and non-coherent UL codebooks, the same combination of DMRS ports (p) is used as the combination of DMRS ports (1000+p) for ranks (= 5, 6, 7, 8) for PDSCH.
[Choice 1-2] A new combination of DMRS ports for ranks (= 5, 6, 7, 8) is used.

The new combination of DMRS ports for ranks (= 5, 6, 7, 8) is used for the antenna port indication table for Rel-18 DMRS ports of enlargement DMRS configuration type 1/enlargement DMRS configuration type 2. The new combination of DMRS ports may allow single symbol DMRS for ranks (= 5, 6, 7, 8) to be used. The new combination of DMRS ports may not exclude an existing combination of DMRS ports in Rel. 15-17.

In STxMP, it is being considered whether antenna ports of separate panels can be configured in the same CDM group. In STxMP, when antenna ports of separate panels cannot be configured in the same CDM group, a DMRS port table may be defined that indicates separate CDM groups to the antenna ports (corresponding to separate UL/joint TCIs) of separate panels. The DMRS port table may be defined for ranks 1/2/3/4 or more ranks. In the STxMP, when the antenna ports of separate panels can be configured in the same CDM group, the DMRS port table may be defined regardless of indicating the separate CDM groups to the antenna ports (corresponding to separate UL/joint TCIs) of separate panels.

In 8Tx, the question arises as to whether antenna ports of separate panels can be configured in the same CDM group. In the 8Tx, when antenna ports of separate panels cannot be configured in the same CDM group, a DMRS port table may be defined that indicates separate CDM groups to the antenna ports (corresponding to separate UL/joint TCIs) of separate panels. The DMRS port table may be defined for ranks 5 to 8 or may be defined for ranks 1 to 4. In the 8Tx, when the antenna ports of separate panels can be configured in the same CDM group, the DMRS port table may be defined regardless of indicating the separate CDM groups to the antenna ports (corresponding to separate UL/joint TCIs) of separate panels.

However, it is not clear what antenna port indication table is used for whether the Rel-15 DMRS port or the Rel-18 DMRS port is used and whether the ranks are 1/2/3/4 or 5/6/7/8.

In view of this, the inventors have come up with a method of indicating antenna ports when the Rel-18 DMRS port is defined.

Embodiments according to the present disclosure will be described below in detail with reference to the drawings as follows. Radio communication methods according to the embodiments may be applied independently or in combination.

In the present disclosure, "A/B" and "at least one of A and B" may be interchangeably interpreted. In the present disclosure, "A/B/C" may mean "at least one of A, B, and C"**.**

In the present disclosure, terms of notification, activate, deactivate, indicate (or designate), select, configure, update, determine, and the like may be interchangeably interpreted. In the present disclosure, terms of support, control, controllable, operate, and operatable may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, higher layer signaling may be, for example, any one or combinations of Radio Resource Control (RRC) signaling, Medium Access Control (MAC) signaling, and broadcast information.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), or other system information (OSI).

In the present disclosure, the physical layer signaling may be, for example, downlink control information (DCI) or uplink control information (UCI).

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, description of "Rel. XX" represents a release of 3GPP. Note that release number "XX" is an example, and may be replaced with another number.

In the present disclosure, a DMRS, a DL DMRS, a UL DMRS, a PDSCH DMRS, and a PUSCH DMRS may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, a DMRS CDM group, a CDM group, a DMRS group, a DMRS CDM group without data, and the like may be interchangeably interpreted. In the present disclosure, an antenna port indication and an antenna port field may be interchangeably interpreted. In the present disclosure, a DMRS configuration type, a DMRS type, and a RRC parameter "dmrs-Type" may be interchangeably interpreted. In the present disclosure, a DMRS maximum length, the number of maximum symbols of the DMRS, the number of symbols of the DMRS, and RRC parameter "max Length" may be interchangeably interpreted.

In the present disclosure, the DMRS type 1 (or DMRS type = 1) may mean that the RRC parameter "dmrs-Type" is not configured (for example, the RRC parameter "dmrs-Type" is absent in the DMRS configuration (DMRS-Downlink Config information element/DMRS-Uplink Config information element)), or may mean that 1 (or type 1 (type1)) is configured as the RRC parameter related to the DMRS type.

In the present disclosure, the DMRS maximum length = 1 may mean that the RRC parameter "maxLength" is not configured (for example, the RRC parameter "maxLength" is absent in the DMRS configuration (DMRS-Downlink Config information element/DMRS-Uplink Config information element)), or may mean that 1 (or length 1 (len 1) is configured as the RRC parameter related to the DMRS maximum length.

In the present disclosure, terms of CDM group list, port group list, and list may be interchangeably interpreted. In the present disclosure, terms of CDM group subset, port group subset, and group subset may be interchangeably interpreted.

In the present disclosure, the rank, the transmission rank, the number of layers, and the number of antenna ports may be interchangeably interpreted. Furthermore, one codeword being applied and the number of layers being equal to or less than four layers may be interchangeably interpreted. Two codewords being applied and the number of layers being greater than four layers may be interchangeably interpreted.

In the present disclosure, "transform precoding is configured" may be interchangeably interpreted as "transform precoding is enabled".

Note that in the present disclosure, "having the capability of ..." may be interchangeably interpreted as "supporting/reporting the capability of ...".

In the present disclosure, the table may be interchangeably interpreted as one or a plurality of tables.

In the present disclosure, the STxMP, the SiMPUL, the multi-panel simultaneous transmission, multi-panel simultaneous UL transmission may be interchangeably interpreted. In addition, the STxMP may mean indicating/configuring a plurality of joint/ULTCI states, spatial relations, and beams for one PUSCH/PUCH/SRS. In the present disclosure, supporting and being configured/indicated may be interchangeably interpreted. In the present disclosure, transmission power and output power may be interchangeably interpreted. In the present disclosure, the determination by the UE and the configuration/indication by a network (base station/gNB) may be interchangeably interpreted.

In the present disclosure, the UL panel, the UE panel, (same) antenna coherent group, the UL/joint TCI, the spatial relation, the PL-RS, and the (same) transmission destination TRP may be interchangeably interpreted.

In the present disclosure, the 8Tx and the UL transmission of layers/ranks with more than four layers may be interchangeably interpreted.

In the present disclosure, the Rel-15 DMRS port, the Rel-15 type 1/2 DMRS port, and the existing DMRS port may be interchangeably interpreted. In the present disclosure, the Rel-18 DMRS port, the Rel-18 enlargement type 1/2 DMRS port, and the new DMRS port may be interchangeably interpreted.

In the present disclosure, the Rel-15 DMRS configuration type, the DMRS configuration type, and the type may be interchangeably interpreted. The Rel-18 DMRS configuration type, the enlargement DMRS configuration type, the enlargement type, and e-type may be interchangeably interpreted.

In the present disclosure, the antenna port table and the antenna port indication table may be interchangeably interpreted. In the present disclosure, the DMRS port combination, the combination of DMRS ports, and one or more DMRS ports corresponding to one value of the antenna port field may be interchangeably interpreted.

DCI in the following embodiments may refer to DCI for scheduling the PUSCH (for example, DCI format 0_x (where x is an integer)).

### (Radio Communication Method)

### <Embodiment #0>

For a certain rank, the antenna port indication table for Rel-15 DMRS port and the antenna port indication table for Rel-18 DMRS port are defined, and such antenna port indication tables may be switched by RRC IE/MAC CE/DCI. An antenna port indication table for certain rank and DMRS configuration type x and an antenna port indication table for the rank and the enlargement DMRS configuration type x may be defined, and such antenna port indication tables may be switched by the RRC IE/MAC CE/DCI, where x may be 1 or 2.

It may be defined that when the DMRS port for PUSCH is indicated by an antenna port field in DCI format 0_1/0_2, the UE assumes that the indicated DMRS port varies depending on an antenna coherence assumption of the UE.

For example, two different antenna coherence assumptions may be Cases A and B. Cases A/B may be in states related to UL panels, such as at least one of at least one of fully coherent, partially coherent, and non-coherent, antenna coherent groups, and the number of UL panels. For example, Case A may be fully coherent/non-coherent, and Case B may be partially coherent.

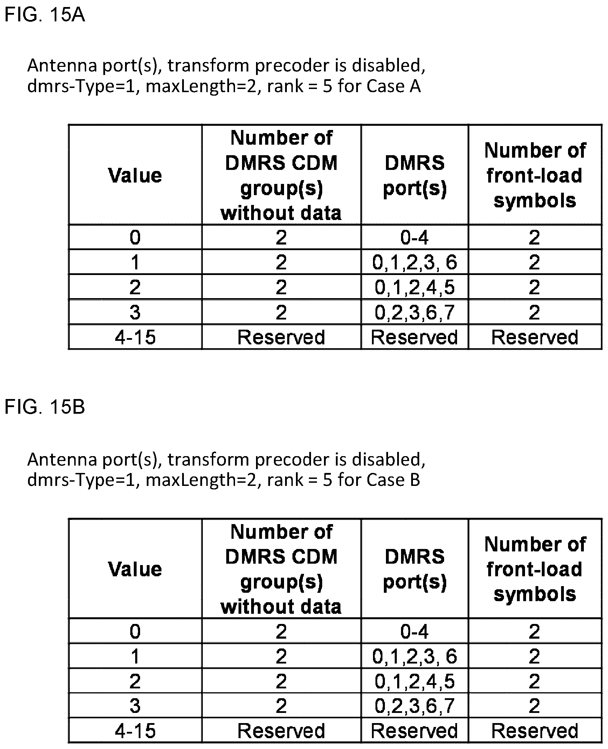

A plurality of antenna port indication tables may be applied to a plurality of different antenna coherence assumptions, respectively. For a certain DMRS configuration type and a certain DMRS maximum length, an antenna port indication table for Case A as in an example of FIG. 15A and an antenna port indication table for Case A as in an example of FIG. 15B may be defined. The number and contents of entries in the antenna port indication table are not limited to such examples. The contents of the antenna port indication table for Case A may be different from the contents of the antenna port indication table for Case B as in the example of FIG. 15B. The UE may select an antenna port indication table corresponding to the antenna coherence assumption, or the antenna port indication table may be configured by higher layer signaling.

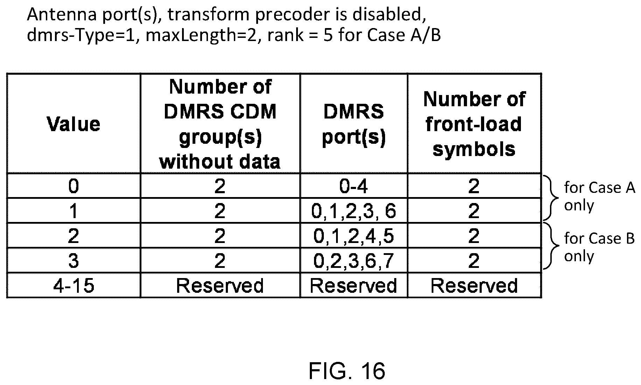

A common antenna port indication table may be applied to a plurality of different antenna coherence assumptions. When two different antenna coherence assumptions are Cases A and B, antenna port indication tables for Cases A and B as in an example of FIG. 16 may be defined for a certain DMRS configuration type and a certain DMRS maximum length. An antenna port field value may correspond to one of a plurality of antenna coherence assumptions. In this example, antenna port field values 0 and 1 may correspond to Case A, and antenna port field values 2 and 3 may correspond to Case B.

According to this embodiment, an antenna port suitable for the antenna coherence assumption can be indicated to the UE.

### <Embodiment #1>

When the DMRS port for PUSCH is indicated by the antenna port field in the DCI format 0_1/0_2, the indicated DMRS port may follow at least one of several options below.

### [Option 1-1]

The UE does not assume that different DMRS ports corresponding to different UL panels are configured in the same CDM group. This option may be applied at least one of when the UE reports a specific UE capability and when the UE is configured/indicated by a specific RRC IE/MAC CE/DCI. For example, when the UE reports at least one UE capability of an 8Tx function and an STxMP SDM function, this option may be applied. For example, when a specific precoder/TPMI is indicated to the UE, this option may be applied.

### [Option 1-2]

The UE also assumes that different DMRS ports corresponding to different UL panels are configured in the same CDM group. This option may be applied at least one of when the UE reports a specific UE capability and when the UE is configured/indicated by a specific RRC IE/MAC CE/DCI. For example, when the UE reports at least one UE capability of an 8Tx function and an STxMP SDM function, this option may be applied. For example, when a specific precoder/TPMI is indicated to the UE, this option may be applied.

### [Option 1-3]

Both options 1-1 and 1-2 are defined in the specification, and these options may be switched by at least one of the UE capability and the higher layer signaling.

For a case where Rel-15 DMRS configuration types 1 and 2 are configured and a case where Rel-18 enlargement DMRS configuration types 1 and 2 are configured, the UE may perform separate operation or a common operation.

When the UE uses the Rel-15 DMRS port, at least one of the antenna port indication tables in Embodiments #1-1 and #1-2. When the UE uses the Rel-15 DMRS port, a combination of only the Rel-15 DMRS ports may be indicated. The Rel-15 DMRS ports may be DMRS ports #0 to #7 for the DMRS configuration type 1, or may be DMRS ports #0 to #11 for the DMRS configuration type 2.

When the UE uses the Rel-18 DMRS port, the UE may follow Embodiment #2.

### <<Embodiment #1-1>>

### <DMRS Ports with Number of Layers Greater Than Four Layers>

Examples of tables of antenna ports for a DMRS port indication with the number of layers greater than four layers when the transform precoder is disabled will be described.

Regarding the codebook-based PUSCH, the UE determines a rank (the number of layers) for PUSCH transmission, based on the precoding information field in the DCI. Regarding the non-codebook-based PUSCH, the UE determines a rank (the number of layers) for PUSCH transmission, based on the SRS resource indicator field in the DCI.

Then, the UE may determine a table of antenna ports corresponding to the determined rank, based on enabled/disabled of the transform precoder, the DMRS type (which may be configured by the RRC parameter "dmrs-Type") of the PUSCH configured by higher layer signaling, and the value of the DMRS maximum length (which may be configured by the RRC parameter "maxLength").

Depending on the value of the antenna port field in the DCI, entries (the entries correspond to a set of the number of CDM groups without data, an antenna port index of the DMRS, the number of front-load symbols, and the like) of the table to be referenced may be determined.

### [Case in Which DMRS Type = 1 and DMRS Maximum Length = 1]

In a case in which DMRS type = 1 and DMRS maximum length = 1, transmission up to rank 4 may be supported. In other words, the UE configured with DMRS type = 1 and DMRS maximum length = 1 may need not support transmission greater than rank 4.

### [Case in Which DMRS Type = 1 and DMRS Maximum Length = 2]

In a case in which DMRS type = 1 and DMRS maximum length = 2, transmission up to rank 8 may be supported.

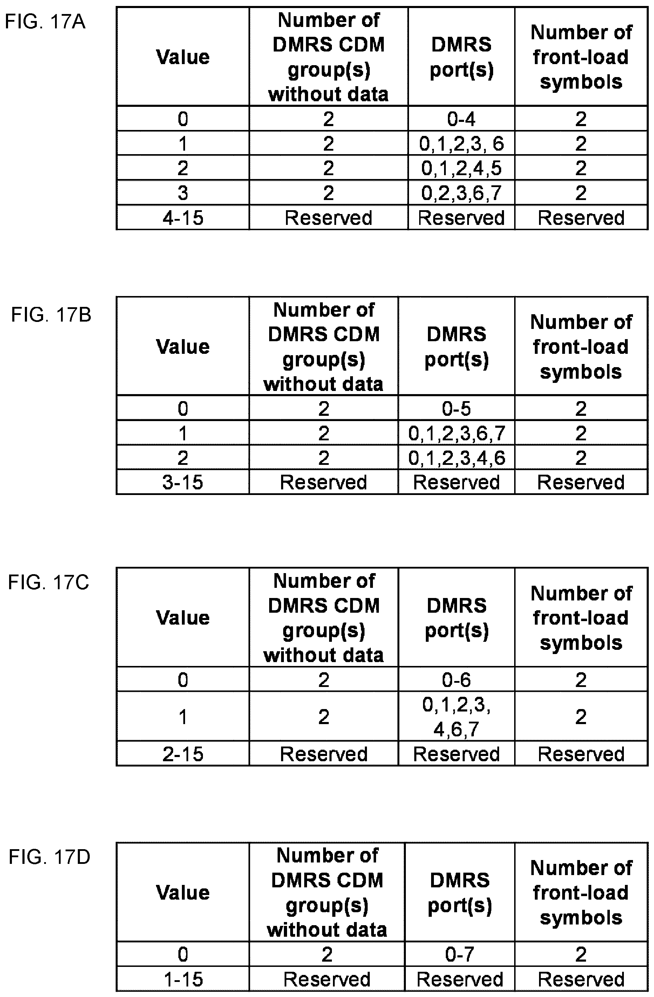

FIGS. 17A to 17D are diagrams to show examples of antenna port tables to be referenced in a case in which the transform precoder is disabled, DMRS type = 1, and DMRS maximum length = 2.

FIG. 17A is an example of a table of antenna ports corresponding to rank 5. In the present example, different sets of DMRS ports (the number of antenna ports is 5) are associated with antenna port field value = 0 to 3. Note that an association between the values and contents of the entries is not limited to this. Other examples are similar.

In FIG. 17A, 2+3 layers and 3+2 layers may be supported. Note that only some of the shown entries may be supported. For example, only the entries of DMRS ports 0 to 4 may be supported for 2+3 layers, and only the entries of DMRS ports 0, 1, 2, 3, and 6 may be supported for 3+2 layers.

FIG. 17B is an example of a table of antenna ports corresponding to rank 6. In the present example, different sets of DMRS ports (the number of antenna ports is 6) are associated with antenna port field value = 0 to 2.

In FIG. 17B, 4+2 layers, 2+4 layers, and 3+3 layers may be supported. Note that only a specific combination of X and Y (for example, 3+3) regarding the X+Y layers may be supported.

FIG. 17C is an example of a table of antenna ports corresponding to rank 7. In the present example, different sets of DMRS ports (the number of antenna ports is 7) are associated with antenna port field value = 0 to 1.

In FIG. 17C, 4+3 layers and 3+4 layers may be supported.

FIG. 17D is an example of a table of antenna ports corresponding to rank 8. In the present example, a set of DMRS ports (the number of antenna ports is 8) is associated with antenna port field value = 0.

In FIG. 17D, only 4+4 layers may be supported.

### [Case in Which DMRS Type = 2 and DMRS Maximum Length = 1]

In a case in which DMRS type = 2 and DMRS maximum length = 1, transmission up to rank 6 may be supported, only transmission up to rank 4 may be supported, or only transmission up to rank 5 may be supported without transmission of rank 6 (for example, 4+2 layers) being supported.

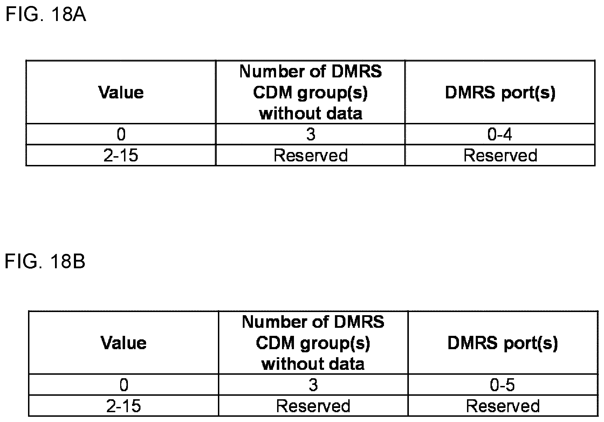

FIGS. 18A and 18B are diagrams to show examples of tables of antenna ports to be referenced when the transform precoder is disabled, DMRS type = 2, and DMRS maximum length = 1.

FIG. 18A is an example of a table of antenna ports corresponding to rank 5. In the present example, a set of DMRS ports (the number of antenna ports is 5) is associated with antenna port field value = 0.

FIG. 18B is an example of a table of antenna ports corresponding to rank 6. In the present example, a set of DMRS ports (the number of antenna ports is 6) is associated with antenna port field value = 0.

### [Case in Which DMRS Type = 2 and DMRS Maximum Length = 2]

In a case in which DMRS type = 2 and DMRS maximum length = 2, transmission up to rank 8 may be supported.

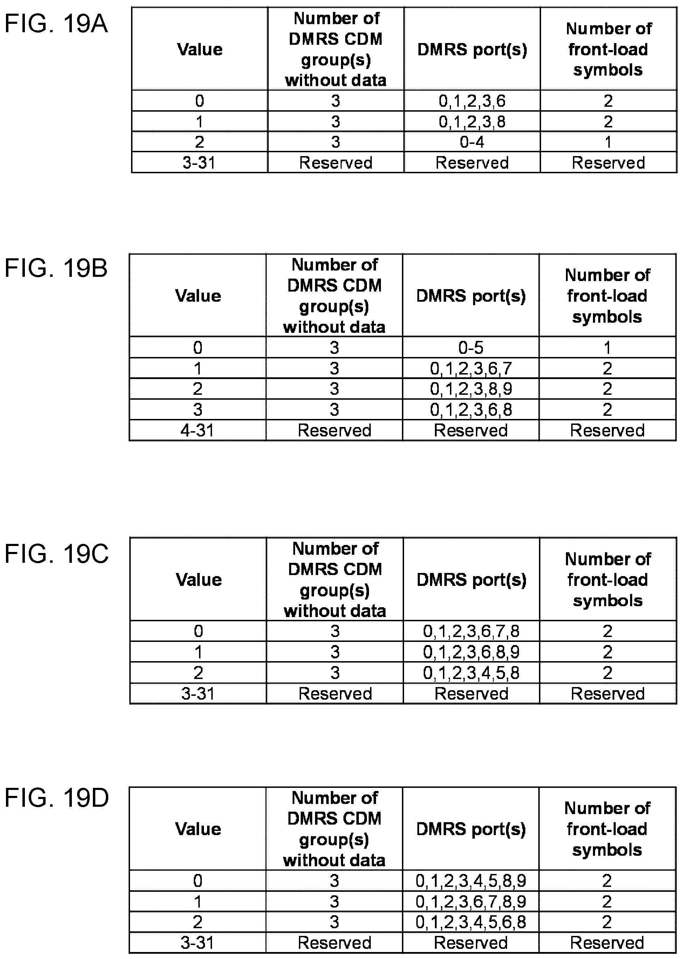

FIGS. 19A to 19D are diagrams to show examples of tables of antenna ports to be referenced to when the transform precoder is disabled, DMRS type = 2, and DMRS maximum length = 2.

FIG. 19A is an example of a table of antenna ports corresponding to rank 5. In the present example, different sets of DMRS ports (the number of antenna ports is 5) are associated with antenna port field value = 0 to 2.

FIG. 19B is an example of a table of antenna ports corresponding to rank 6. In the present example, different sets of DMRS ports (the number of antenna ports is 6) are associated with antenna port field value = 0 to 3.

In FIG. 19B, 4+2 layers, 2+4 layers, and 3+3 layers may be supported. Note that only a specific combination of X and Y (for example, 3+3) regarding the X+Y layers may be supported. For example, only the entries corresponding to antenna port field value = 3 of FIG. 17B may be supported for 3+3 layers.

FIG. 19C is an example of a table of antenna ports corresponding to rank 7. In the present example, different sets of DMRS ports (the number of antenna ports is 7) are associated with antenna port field value = 0 to 2.

FIG. 19D is an example of a table of antenna ports corresponding to rank 8. In the present example, sets of DMRS ports (the number of antenna ports is 8) are associated with antenna port field value = 0 to 2.

Regarding FIG. 19D, only the entries corresponding to 4+4 layers may be supported.

According to Embodiment #1-1, the DMRS port indication with the number of layers greater than four layers, the antenna ports can be appropriately indicated regarding the PUSCH using the number of layers greater than four when the transform precoder is disabled.

A DMRS port table satisfying Option 1-1 may be defined.

According to this embodiment, the UE can transmit the PUSCH using an appropriate DMRS port.

### <Embodiment #2>

This embodiment relates to a case where the UE is configured with a Rel-18 DMRS port (rank being 5 to 8) and a DMRS maximum length (maxLength) is 1.

In the case of DMRS maximum length (maxLength) = 1, Embodiment #2-1 may be followed. When the Rel-18 enlargement DMRS configuration type 1 is configured, a combination of DMRS ports 0 to 3 and 8 is a combination of 5 ports in total which are 3 ports from CDM group #0 and 2 ports from CDM group #1. A combination of DMRS ports 0 to 2 and 8 and 9 is a combination of 5 ports in total which are 4 ports from CDM group #0 and 1 port from CDM group #1. A combination of DMRS ports 0, 1, and 8 to 10 is a combination of 5 ports in total which are 4 ports from CDM group #0 and 1 port from CDM group #1. A combination of DMRS ports 0 and 8 to 11 is a combination of 5 ports in total which are 3 ports from CDM group #0 and 2 port from CDM group #1.

In Embodiment #2-1, combinations where the number of ports in the CDM group #0 plus the number of ports in the CDM group #1 is 5 ports are combinations of 3+2 ports, 4+1 ports, 4+1 ports, and 3+2 ports. Since the effect of preparing two combinations of 4+1 ports is small, one of the two combinations may be excluded. The combination of 1+4 ports (for example, DMRS ports 0, 2, 3, 10, and 11) may be added instead of one combination of 4+1 ports. In the added combination, any one of DMRS ports 1, 8, and 9 may be used instead of DMRS port 0.

The DMRS port combination in Embodiment #2-1 uses more DMRS ports in the CDM group #0. In CDM groups #1/#2, the DMRS port combination using more DMRS ports may be added.

### <<Embodiment #2-1>>

In Embodiment #2-1, for PUSCH transmission of rank 5 or higher, the UE may use a combination of a Rel-15 DMRS port of single symbol DMRS and a Rel-18 DMRS port of single symbol DMRS.

For the DMRS type 1, the UE may be designated with combinations of DMRS ports below by the antenna port field:
- For rank 8, a combination of port indexes #0, #1, #2, #3, #8, #9, #10, and #11,
- For rank 7, a combination of seven indexes (for example, #0, #1, #2, #3, #8, #9, and #10) among port indexes #0, #1, #2, #3, #8, #9, #10, and #11,
- For rank 6, a combination of six indexes (for example, #0, #1, #2, #3, #8, and #9) among port indexes #0, #1, #2, #3, #8, #9, #10, and #11, and
- For rank 5, a combination of five indexes (for example, #0, #1, #2, #3, and #8) among port indexes #0, #1, #2, #3, #8, #9, #10, and #11.

For the DMRS type 2, the UE may be designated with combinations of DMRS ports below by the antenna port field:
- For rank 8, a combination of eight indexes (for example, #0, #1, #2, #3, #4, #5, #12, and #13) among port indexes #0, #1, #2, #3, #4, #5, #12, #13, #14, #15, #16, and #17,
- For rank 7, a combination of seven indexes (for example, #0, #1, #2, #3, #4, #5, and #12) among port indexes #0, #1, #2, #3, #4, #5, #12, #13, #14, #15, #16, and #17,
- For rank 6, a combination of six indexes (for example, #0, #1, #2, #3, #4, and #5) among port indexes #0, #1, #2, #3, #4, #5, #12, #13, #14, #15, #16, and #17, and
- For rank 5, a combination of five indexes (for example, #0, #1, #2, #3, and #4) among port indexes #0, #1, #2, #3, #4, #5, #12, #13, #14, #15, #16, and #17.

Hereinafter, a description will be given with respect to an example of a table of antenna ports for PUSCH DMRS port indication (hereinafter, also referred to as an antenna port indication table, a DMRS port indication table, a DMRS port table, or the like). In addition, the UE may determine any antenna port indication table which is referenced based on a rank value determined based on a precoding information field/SRI field, the DMRS type, and the maximum length of the DMRS.

The UE may receive DCI related to PUSH including the antenna port field (antenna port indication), and control the transmission (e.g., mapping) of DMRS/PUSCH based on the value of the field and the antenna port indication table that is determined to be reference.

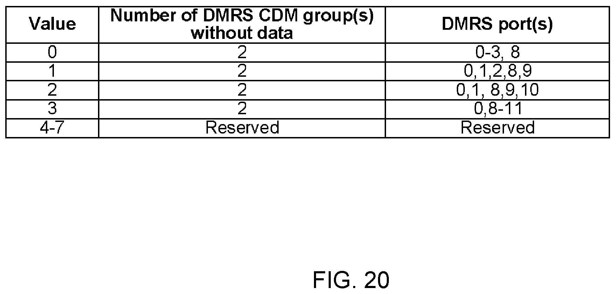

FIG. 20 is a diagram to show an example of an antenna port indication table to be referenced when the transform precoder is disabled and when DMRS type = 1, DMRS maximum length = 1, and rank = 5 according to Embodiment #2-1. The antenna port field values being 0-3 correspond to {the number of Rel-15 DMRS ports, the number of Rel-18 DMRS ports} = {4, 1}, {3, 2}, {2, 3}, and {1, 4}, respectively.

A DMRS port combination of one or more DMRS ports from a DMRS port set A0 {0, 1, 8, 9} and one or more DMRS ports from a DMRS port set B0 {2, 3, 10, 11} may be added to the antenna port indication table, and may be replaced with any DMRS port combination in this antenna port indication table. The order of sets A0 and B0 may be switched.

For example, the antenna port indication table may include a DMRS port combination of 1+4 layers including one port from the set A0 and four ports from the set B0. For example, the antenna port indication table may include a DMRS port combination of 2+3 layers including two ports from the set A0 and three ports from the set B0. For example, the antenna port indication table may include a DMRS port combination of 3+2 layers including three ports from the set A0 and two ports from the set B0. For example, the antenna port indication table may include a DMRS port combination of 4+1 layers including four ports from the set A0 and one port from the set B0.

Note that the shown table may be referenced by the UE when the UE is configured with Rel-18 DMRS (or enabling of Rel-18 DMRS/enabling of Rel-18 DMRS port). Further, a plurality of entries (rows in the table) may be defined to represent the same {the number of Rel-15 DMRS ports, the number of Rel-18 DMRS ports}, only some of the entries shown in the drawing may be defined, or a combination of port indexes different from the combination of the port indexes shown in the drawing may be defined (the same applies to subsequent drawings related to the antenna port indication table).

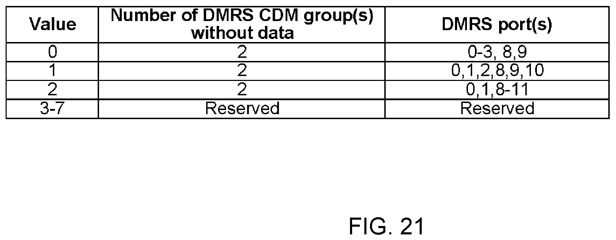

FIG. 21 is a diagram to show an example of an antenna port indication table to be referenced when the transform precoder is disabled and when DMRS type = 1, DMRS maximum length = 1, and rank = 6 according to Embodiment #2-1. The antenna port field values being 0-2 correspond to {the number of Rel-15 DMRS ports, the number of Rel-18 DMRS ports} = {4, 2}, {3, 3}, and {2, 4}, respectively.

For example, the antenna port indication table may include a DMRS port combination of 2+4 layers including two ports from the set A0 and four ports from the set B0. For example, the antenna port indication table may include a DMRS port combination of 3+3 layers including three ports from the set A0 and three ports from the set B0. For example, the antenna port indication table may include a DMRS port combination of 4+2 layers including four ports from the set A0 and two ports from the set B0.

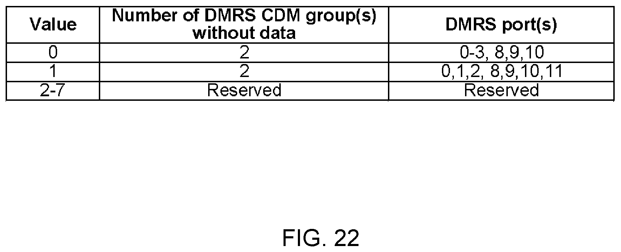

FIG. 22 is a diagram to show an example of an antenna port indication table to be referenced when the transform precoder is disabled and when DMRS type = 1, DMRS maximum length = 1, and rank = 7 according to Embodiment #2-1. The antenna port field values being 0-1 correspond to {the number of Rel-15 DMRS ports, the number of Rel-18 DMRS ports} = {4, 3} and {3, 4}, respectively.

For example, the antenna port indication table may include a DMRS port combination of 3+4 layers including three ports from the set A0 and four ports from the set B0. For example, the antenna port indication table may include a DMRS port combination of 4+3 layers including four ports from the set A0 and three ports from the set B0.

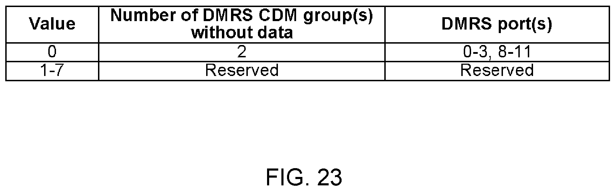

FIG. 23 is a diagram to show an example of an antenna port indication table to be referenced when the transform precoder is disabled and when DMRS type = 1, DMRS maximum length = 1, and rank = 8 according to Embodiment #2-1. The antenna port field value being 0 corresponds to {the number of Rel-15 DMRS ports, the number of Rel-18 DMRS ports} = {4, 4}.

For example, the antenna port indication table may include a DMRS port combination of 4+4 layers including four ports from the set A0 and four ports from the set B0.

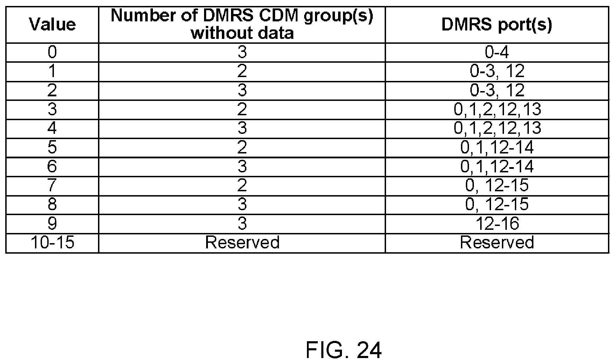

FIG. 24 is a diagram to show an example of an antenna port indication table to be referenced when the transform precoder is disabled and when DMRS type = 2, DMRS maximum length = 1, and rank = 5 according to Embodiment #2-1. The antenna port field values being 0, 1-2, 3-4, 5-7, 7-8, and 9 correspond to {the number of Rel-15 DMRS ports, the number of Rel-18 DMRS ports} = {5, 0}, {4, 1}, {3, 2}, {2, 3}, {1, 4}, and {0, 5}, respectively.

Note that the number of DMRS ports corresponding to {the number of Rel-15 DMRS ports, the number of Rel-18 DMRS ports} = {5, 0}, {0, 5} shown in the drawing use all of the CDM groups #0-#2 (as can be seen from FIG. 12), and thus the number of CDM groups is 3.

Furthermore, the number of DMRS ports corresponding to {the number of Rel-15 DMRS ports, the number of Rel-18 DMRS ports} = {4, 1}, {3, 2}, {2, 3}, {1, 4} shown in the drawing use two of the CDM groups #0-#2 (as can be seen from FIG. 12), and thus the number of CDM groups is 2 or 3. When the number of CDM groups is 2, the UE can transmit a PUSCH in a resource element corresponding to the remaining one CDM group in the DMRS symbol (can map a block of complex-valued symbols (generated by data encoding, etc.) to the designated DMRS port (the port for PUSCH transmission)), and thus it is expected to increase communication throughput or reduce the error rate of the PUSCH based on a reduction of an encoding rate.

Furthermore, when the number of CDM groups 3, other UEs can perform DMRS/PUSCH transmission using the remaining one CDM group, and thus it is expected to improve system utilization efficiency.

In this way, when a table shown in FIG. 24 is adopted, the different number of CDM groups can be designated to the UE for the same set of {the number of Rel-15 DMRS ports, the number of Rel-18 DMRS ports} (or a combination of the same DMRS ports), and thus flexible control can be performed in consideration of a traffic of each UE.

DMRS port combinations from at least two sets of DMRS port set A {0, 1, 12, 13}, DMRS port set B {2, 3, 14, 15}, and DMRS port set C {4, 5, 16, 17} may be added to the antenna port indication table, or may be replaced with any DMRS port combination in the antenna port indication table. The order of sets A, B, and C may be switched.

For example, the antenna port indication table may include a DMRS port combination of 1+4 layers including one port from the set A0 and four ports from the set B0. For example, the antenna port indication table may include a DMRS port combination of 2+3 layers including two ports from the set A0 and three ports from the set B0. For example, the antenna port indication table may include a DMRS port combination of 3+2 layers including three ports from the set A0 and two ports from the set B0. For example, the antenna port indication table may include a DMRS port combination of 1+1+3 layers including one port from the set A0, one port from the set B0, and three ports from the set C. For example, the antenna port indication table may include a DMRS port combination of 1+2+2 layers including one port from the set A0, two ports from the set B0, and two ports from the set C.

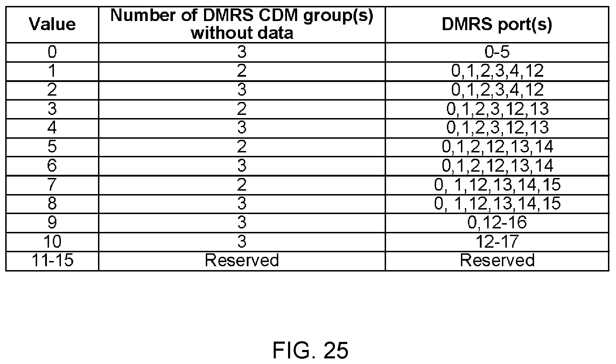

FIG. 25 is a diagram to show an example of an antenna port indication table to be referenced when the transform precoder is disabled and when DMRS type = 2, DMRS maximum length = 1, and rank = 6 according to Embodiment #2-1.

For example, the antenna port indication table may include a DMRS port combination of 2+4 layers including two ports from the set A0 and four ports from the set B0. For example, the antenna port indication table may include a DMRS port combination of 3+3 layers including three ports from the set A0 and three ports from the set B0. For example, the antenna port indication table may include a DMRS port combination of 4+2 layers including four ports from the set A0 and two ports from the set B0. For example, the antenna port indication table may include a DMRS port combination of 1+1+4 layers including one port from the set A0, one port from the set B0, and four ports from the set C. For example, the antenna port indication table may include a DMRS port combination of 1+2+3 layers including one port from the set A0, two ports from the set B0, and three ports from the set C.

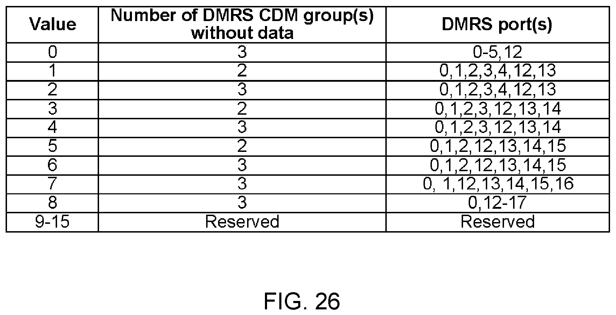

FIG. 26 is a diagram to show an example of an antenna port indication table to be referenced when the transform precoder is disabled and when DMRS type = 2, DMRS maximum length = 1, and rank = 7 according to Embodiment #2-1.

The order of sets A, B, and C may be switched. For example, the antenna port indication table may include a DMRS port combination of 3+4 layers including three ports from the set A0 and four ports from the set B0. For example, the antenna port indication table may include a DMRS port combination of 4+3 layers including four ports from the set A0 and three ports from the set B0. For example, the antenna port indication table may include a DMRS port combination of 1+2+4 layers including one port from the set A0, two ports from the set B0, and four ports from the set C. For example, the antenna port indication table may include a DMRS port combination of 2+2+3 layers including two ports from the set A0, two ports from the set B0, and three ports from the set C.

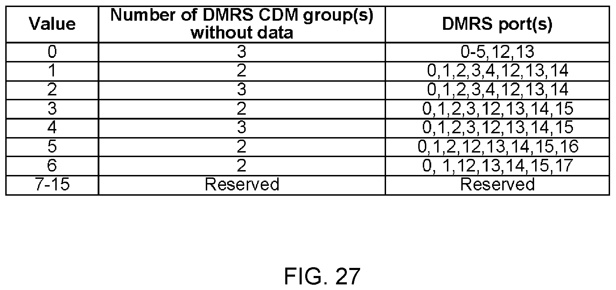

FIG. 27 is a diagram to show an example of an antenna port indication table to be referenced when the transform precoder is disabled and when DMRS type = 2, DMRS maximum length = 1, and rank = 8 according to Embodiment #2-1.

For example, the antenna port indication table may include a DMRS port combination of 4+4 layers including four ports from the set A0 and four ports from the set B0. For example, the antenna port indication table may include a DMRS port combination of 1+3+4 layers including one port from the set A0, three ports from the set B0, and four ports from the set C. For example, the antenna port indication table may include a DMRS port combination of 2+2+4 layers including two ports from the set A0, two ports from the set B0, and four ports from the set C.

According to Embodiment #2-1, since the PUSCH transmission of rank 5 or higher can be performed based on the single symbol DMRS, a communication overhead required for DMRS can be reduced compared to the case based on the double symbol DMRS. In addition, when the antenna port indication table with the DMRS maximum length = 1, the size of the antenna port field of the DCI can be reduced compared to a case of the DMRS maximum length =2 (for example, the tables shown in FIGS. 17A to 17D), and thus communication overhead required for the antenna port field can be reduced.

According to this embodiment, the UE can transmit the PUSCH using an appropriate DMRS port.

### <Embodiment #3>

This embodiment relates to a case where the UE is configured with a Rel-18 DMRS port (rank being 5 to 8) and a DMRS maximum length (maxLength) is 2.

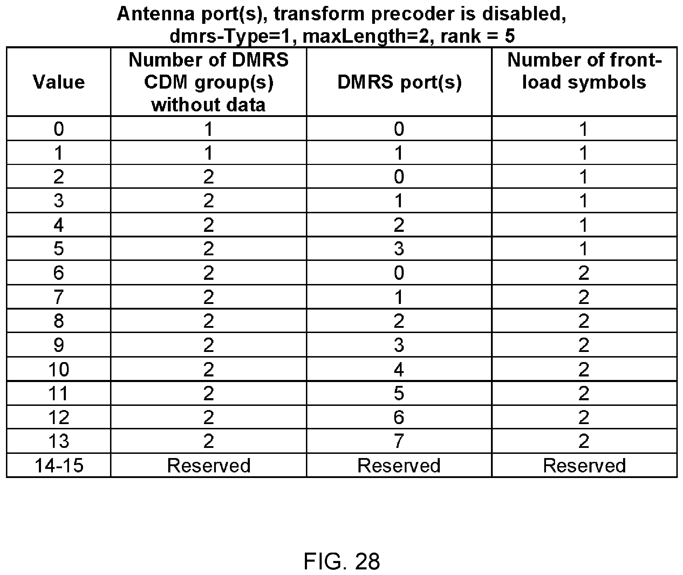

FIG. 28 is a diagram to show an example of an antenna port indication table to be referenced when the transform precoder is disabled and when DMRS type = 1, DMRS maximum length = 2, and rank = 5. The number and contents of entries in the antenna port indication table are not limited to such an example.

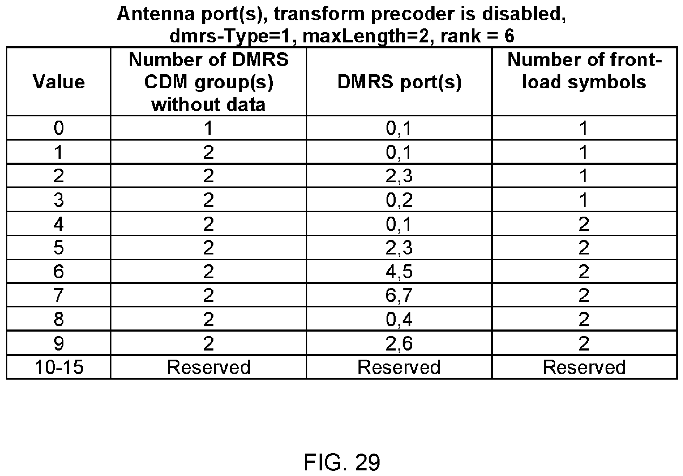

FIG. 29 is a diagram to show an example of an antenna port indication table to be referenced when the transform precoder is disabled and when DMRS type = 1, DMRS maximum length = 2, and rank = 6. The number and contents of entries in the antenna port indication table are not limited to such an example.

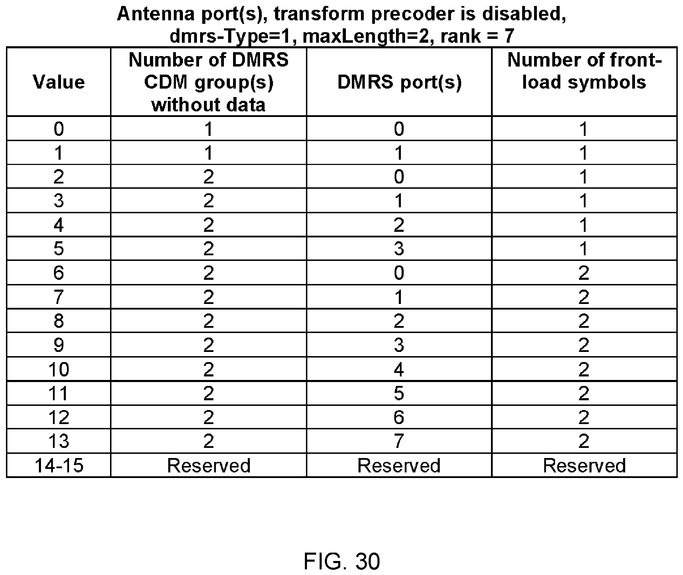

FIG. 30 is a diagram to show an example of an antenna port indication table to be referenced when the transform precoder is disabled and when DMRS type = 1, DMRS maximum length = 2, and rank = 7. The number and contents of entries in the antenna port indication table are not limited to such an example.

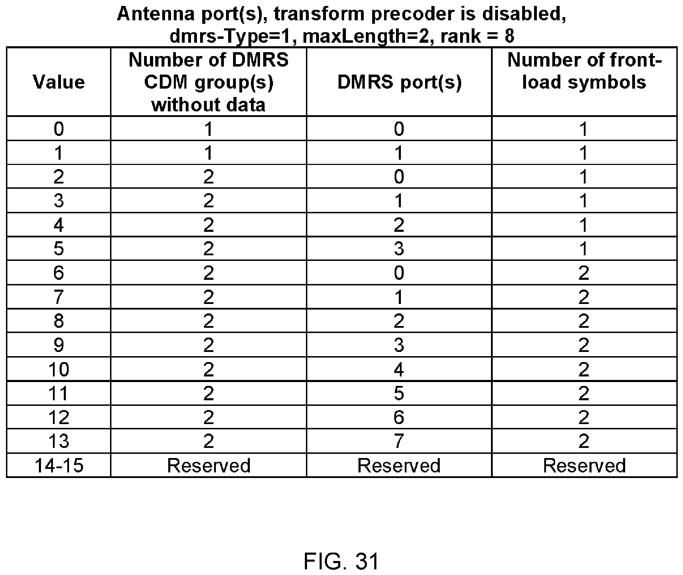

FIG. 31 is a diagram to show an example of an antenna port indication table to be referenced when the transform precoder is disabled and when DMRS type = 1, DMRS maximum length = 2, and rank = 8. The number and contents of entries in the antenna port indication table are not limited to such an example.

In the above-described antenna port indication tables for DMRS maximum length = 2 and rank = 5/6/7/8, the DMRS port combination corresponding to the number of front-loaded symbols being 1 may be the same as the DMRS port combination for DMRS maximum length = 1 according to Embodiment #2-1.

In the above-described antenna port indication tables for DMRS maximum length = 2 and rank = 5/6/7/8, the DMRS port combination corresponding to the number of front-loaded symbols being 2 may follow below.

For Rel-18 enlargement type 1 DMRS port, the DMRS port combination with the maximum length (maxLength) = 2 and the number of front-loaded symbols being 1 may be based on sets X {0, 1, 4, 5, 8, 9, 12, 13} and Y {2, 3, 6, 7, 10, 11, 14, 15} of DMRS ports. The order of sets X and Y may be switched. In the DMRS port combination, the total of the number of ports from set X and the number of ports from set Y may be a rank. The DMRS port combination may follow at least one below.
- For rank 5, at least one of the following combinations may be defined: a combination of four ports from set X and one port from set Y, a combination of three ports from set X and two ports from set Y, a combination of two ports from set X and three ports from set Y, and a combination of one port from set X and four ports from set **Y.**
- For rank 6, at least one of the following combinations may be defined: a combination of four ports from set X and two port from set Y, a combination of three ports from set X and three ports from set Y, and a combination of two ports from set X and four ports from set **Y.**
- For rank 7, at least one of the following combinations may be defined: a combination of four ports from set X and three ports from set Y and a combination of three ports from set X and four ports from set **Y.**
- For rank 8, at least one combination of four ports from set X and four ports from set **Y.**

For Rel-18 enlargement type 2 DMRS port, the DMRS port combination with the maximum length (maxLength) = 2 and the number of front-loaded symbols being 1 may be based on at least two of sets X {0, 1, 6, 7, 12, 13, 1, 19}, Y {2, 3, 8, 9, 14, 15, 20, 21}, and Z {4, 5, 10, 11, 16, 17, 22, ·23} of DMRS ports. The order of sets X, Y, and Z may be switched. In the DMRS port combination, the total of the number of ports from set X and the number of ports from set Y may be a rank, or the total of the number of ports from set X, the number of ports from set Y, and the number of ports from set Z may be a rank. The DMRS port combination may follow at least one below.
- For rank 5, at least one of the following combinations may be defined: a combination of four ports from set X and one port from set Y; a combination of three ports from set X and two ports from set Y; a combination of two ports from set X and three ports from set Y; and a combination of one port from set X and four ports from set Y.
- For rank 5, at least one of the following combinations may be defined: a combination of three ports from set X, one port from set Y, and one port from set Z; and a combination of two ports from set X, two ports from set Y, and one port from set Z.
- For rank 6, at least one of the following combinations may be defined: a combination of four ports from set X and two port from set Y; a combination of three ports from set X and three ports from set Y; and a combination of two ports from set X and four ports from set Y.
- For rank 6, at least one of the following combinations may be defined: a combination of four ports from set X, one port from set Y, and one port from set Z; and a combination of three ports from set X, two ports from set Y, and one port from set Z.
- For rank 7, at least one of the following combinations may be defined: a combination of four ports from set X and three ports from set Y; and a combination of three ports from set X and four ports from set Y.
- For rank 7, at least one of the following combinations may be defined: a combination of four ports from set X, two ports from set Y, and one port from set Z; a combination of three ports from set X, two ports from set Y, and two ports from set Z; and a combination of three ports from set X, three ports from set Y, and one port from set Z.
- For rank 8, at least one combination of four ports from set X and four ports from set Y.
- For rank 8, at least one of the following combinations may be defined: a combination of four ports from set X, two ports from set Y, and two ports from set Z; a combination of four ports from set X, three ports from set Y, and one port from set Z; and a combination of three ports from set X, three ports from set Y, and two ports from set Z.

The total number of ports in the DMRS port combination may be equal to the number of ranks.

According to this embodiment, the UE can transmit the PUSCH using an appropriate DMRS port when the DMRS maximum length is 2 and the rank is from 5 to 8.

### <Embodiment #4>

This embodiment relates to a PUSCH with the DMRS maximum length being 2 and the rank from 5 to 8.

An antenna port indication table including all of the plurality of DMRS port combinations described in at least one of Embodiments #1 to 3 may be defined in the specification. An antenna port indication table including some of the plurality of DMRS port combinations described in at least one of Embodiments #1 to 3 may be defined in the specification.

The number "a" of layers (DMRS ports) within the CDM group #0 and the number "b" of layers (DMRS ports) within the CDM group #1 in the DMRS port combination can be expressed in the form of a+b layers. For example, the antenna port indication table may include all of the DMRS port combinations of 1+4 layers, 2+3 layers, 3+2 layers, and 4+1 layers for rank 5, or may include some of these DMRS port combinations. When the UE performs transmission using a plurality of panels (for example, in a case of partial coherence/non-coherence, Ng = 2 or 4, and STxMP), it is considered that the power/quality of transmission/reception may differ for each panel. It is preferable to be able to flexibly indicate the combination of the number of ports within each CDM group. On the other hand, when the UE performs transmission using a common panel (for example, in a case of being fully coherent, in a case of Ng = 1, and in a case of not being STxMP), it is considered that the effect is small even when the combination of the number of ports within each CDM group can be flexibly indicated.

In a specific rank and a specific DMRS configuration type/DMRS max length configuration, an indicatable DMRS port combination/antenna port indication table may be switched. The switching may be based on the higher layer signaling/UE capability. According to the switching, the size of the antenna port field may be switched.

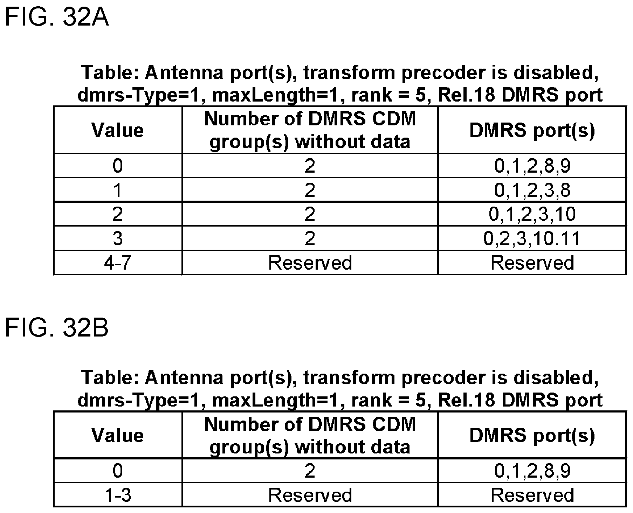

An antenna port indication table A having higher flexibility in DMRS port combinations as in an example of FIG. 32A and an antenna port indication table B having lower flexibility in DMRS port combinations as in an example of FIG. 32B may be defined. The antenna port indication table A includes DMRS port combinations of 1+4 layers, 2+3 layers, 3+2 layers, and 4+1 layers for rank 5. The antenna port indication table B includes DMRS port combinations of 4+1 layers for rank 5. The size of the antenna port field when the antenna port indication table A is configured may be larger than the size of the antenna port field when the antenna port indication table B is configured. For example, the size of the antenna port field when the antenna port indication table A is configured may be 3 bits, and the size of the antenna port field when the antenna port indication table B is configured may be 2 bits.

According to this embodiment, the UE can transmit the PUSCH using an appropriate antenna port indication table.

### <Embodiment #5>

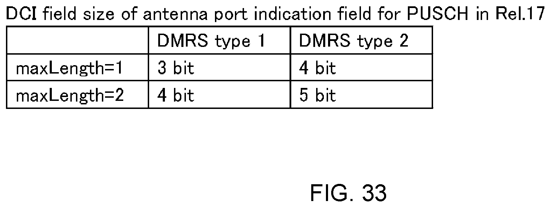

FIG. 33 shows an example of a size of an antenna port field in Rel. 17.

It is considered that the number of DMRS port combinations for a rank greater than 4 may be smaller than the number of DMRS port combinations for ranks equal to or less than 4. In the antenna port indication table for the rank greater than 4, it is considered that the number of reserved values for the antenna port field may be larger, resulting in inefficiency of the antenna port field.

The number of bits representing the antenna port field value for ranks greater than 4 may be smaller than the number of bits representing the antenna port field value for ranks equal to or less than 4. The antenna port field may follow at least one of several options below.

### [option 5-1]

An operation using the ranks equal to or less than 4 (ranks 1 to 4) and an operation using the ranks greater than 4 (ranks 5 to 8) are switched by the RRC IE/MAC CE. In this case, the size of the antenna port field for the ranks greater than 4 may be smaller than the size of the antenna port field for the ranks equal to or less than 4.

### [option 5-2]

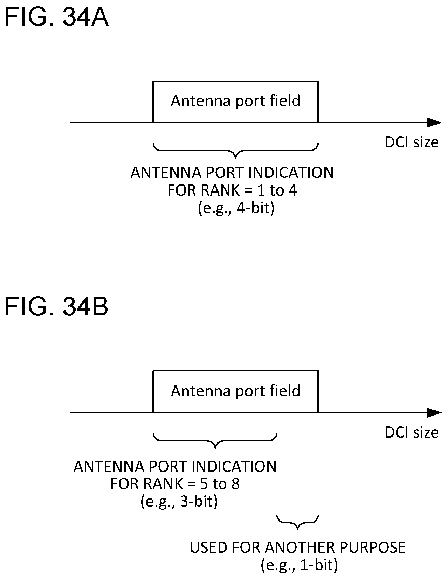

An operation using the ranks equal to or less than 4 (ranks 1 to 4) and an operation using the ranks greater than 4 (ranks 5 to 8) are switched by the DCI (for example, TPMI/SRI). In this case, the size of the antenna port field for the ranks greater than 4 (see FIG. 34A) may be equal to the size of the antenna port field for the ranks equal to or less than 4 (see FIG. 34B). The number of bits representing the actual antenna port field value (antenna port indication) may be less by x bits than the size (the number of bits) of the antenna port field, where x may be 1, or may be greater than 1. The x bits may be used for other indications, or may be used for indications combined with other DCI fields. The antenna port field value may be indicated by a plurality of bits obtained excluding x MSB or x LSB from a plurality of bits of the antenna port field.

It is considered that DCI overhead increases to support 8Tx (ranks greater than 4)/STxMP. For example, a second TPMI field, a second SRI field, a second TPC command field, and the like may be added. In the ranks greater than 4, the number of bits representing the antenna port field value is reduced, and the reduced bits can be used for other indications.

### [Variation]

Although an example has been described above in which one antenna port field indicates one or more DMRS ports, the DCI may include a plurality of antenna port fields corresponding to a plurality of antennas/panels/ranks, respectively, and may indicate a DMRS port for each of the plurality of antennas/panels/ranks.

According to this embodiment, it is possible to prevent the overhead of the DCI.

### <Supplements>

In the present disclosure, a UE/base station using (/referring to/performing processing based on) a table may mean using a sequence, a list, a function, or the like including information conforming to the table, without being limited to meaning using the table itself.

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific
   processing/operation/control/information for at least one of the embodiments above
- supporting of dynamic switching between Rel-15 DMRS ports (table) and Rel-18 DMRS ports (table)
- supporting of PUSCH transmission with the number of layers greater than four
- supporting of ST × MP
- supporting of a single-DCI based ST × MP PUSCH SDM (ST × MP SDM) scheme P
- supporting of an SFN-based transmission scheme for ST × MP PUSCH transmission in a single-DCI based multi-TRP system
- supporting of 8Tx

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of dynamic switching of DMRS ports, information indicating enabling of dynamic switching of DMRS ports of specific releases (for example, Rel-15 DMRS ports and Rel-18 DMRS ports), information indicating enabling of dynamic switching of antenna port indication tables, information indicating enabling of increased DMRS ports, configuration information of DMRS type 1 (or 2)/single-symbol DMRS/the maximum length of DMRS being 1 (= 1), any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a receiving section that receives downlink control information for scheduling an uplink shared channel involving a plurality of repetitions using a same frequency resource and a same time resource; and
a control section that determines a combination of a plurality of demodulation reference signal (DMRS) ports, based on the downlink control information.

### {Supplementary Note 2}

The terminal according to supplementary note 1, wherein
the combination includes a plurality of ports from a plurality of code division multiplexing (CDM) groups.

### {Supplementary Note 3}

The terminal according to supplementary note 1 or 2, wherein
the combination depends on an antenna coherence assumption.

### {Supplementary Note 4}

The terminal according to any one of supplementary notes 1 to 3, wherein
the combination is associated with a plurality of panels.

### (Supplementary Notes)

Regarding one embodiment of the present disclosure, the following supplementary notes of the invention will be given.

### {Supplementary Note 1}

A terminal including:
a receiving section that receives downlink control information for scheduling an uplink shared channel with a rank greater than 4; and
a control section that determines a combination of a plurality of demodulation reference signal ports, based on the downlink control information.

### {Supplementary Note 2}

The terminal according to supplementary note 1, wherein
the combination includes a plurality of ports from a plurality of code division multiplexing (CDM) groups.

### {Supplementary Note 3}

The terminal according to supplementary note 1 or 2, wherein
the combination depends on an antenna coherence assumption.

### {Supplementary Note 4}

The terminal according to any one of supplementary notes 1 to 3, wherein
the combination is associated with a plurality of panels.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

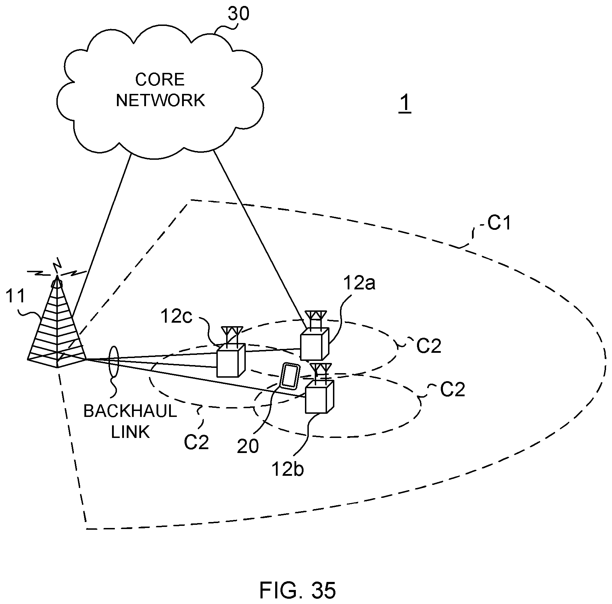

FIG. 35 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR), and the like the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE,, and the like.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions, and the like of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, and the like) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NFs) such as User Plane Function (UPF), Access and Mobility management Function (AMF), Session Management Function (SMF), Unified Data Management (UDM), ApplicationFunction (AF), Data Network (DN), Location Management Function (LMF), and Operation, Administration and Maintenance (Management) (OAM), for example. Note that one network node may provide a plurality of functions. Communication with an external network (for example, the Internet) may be performed via the DN.

The user terminal 20 may be a terminal supporting at least one of communication schemes such as LTE, LTE-A, 5G, and the like.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and the like may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)), and the like, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)), and the like may be used as uplink channels.

User data, higher layer control information, System Information Blocks (SIBs), and the like are communicated on the PDSCH. User data, higher layer control information, and the like may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and the like, and DCI for scheduling the PUSCH may be referred to as "UL grant," "UL DCI," and the like. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration," and the like of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and the like), and scheduling request (SR) may be communicated by means of the PUCCH. By means of the PRACH, random access preambles for establishing connections with cells may be communicated.

Note that the downlink, the uplink, and the like in the present disclosure may be expressed without a term of "link." In addition, various channels may be expressed without adding "Physical" to the head.

In the radio communication system 1, a synchronization signal (SS), a downlink reference signal (DL-RS), and the like may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and the like may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS block (SSB)," and the like. Note that an SS, an SSB, and the like may be referred to as a "reference signal."

In the radio communication system 1, a sounding reference signal (SRS), a demodulation reference signal (DMRS), and the like may be communicated as an uplink reference signal (UL-RS). Note that DMRS may be referred to as a "user terminal specific reference signal (UE-specific Reference Signal)."

### (Base Station)

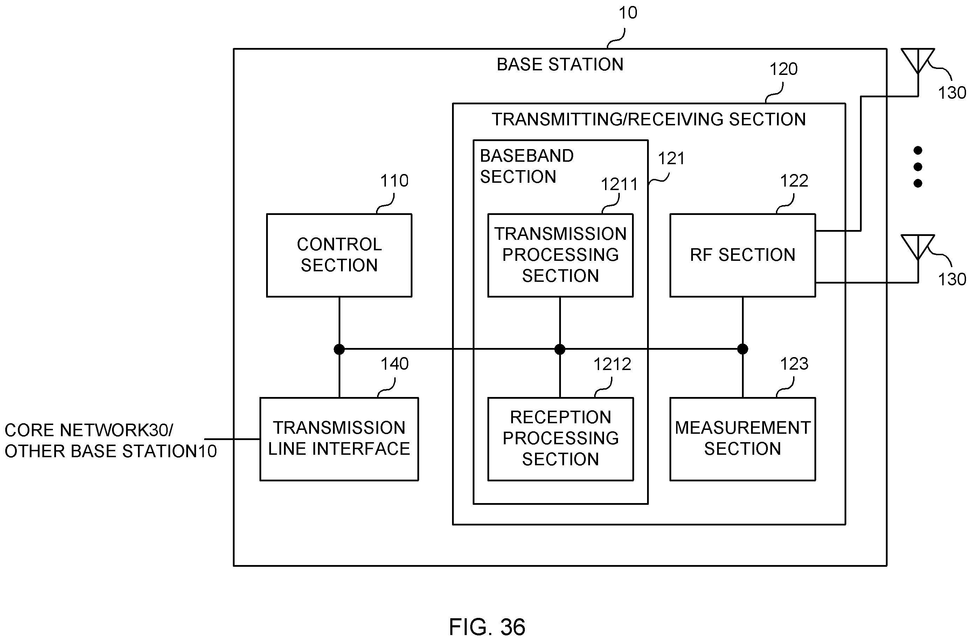

FIG. 36 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and the like. The control section 110 may control transmission and reception, measurement, and the like using the transmitting/receiving section 120, the transmitting/receiving antennas 130, and the communication path interface 140. The control section 110 may generate data, control information, a sequence, and the like to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmit beam and a receive beam by using digital beam forming (for example, precoding), analog beam forming (for example, phase rotation), and the like.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and the like, for example, on data and control information, and the like acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and the like, on the bit string to transmit, and output a baseband signal.

The transmitting/receiving section 120 (RF section 122) may perform modulation to a radio frequency band, filtering, amplification, and the like, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and the like, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and the like, on the acquired baseband signal, and acquire user data, and the like.

The transmitting/receiving section 120 (measurement section 123) may perform the measurement related to the received signal. For example, the measurement section 123 may perform Radio Resource Management (RRM) measurement, Channel State Information (CSI) measurement, and the like, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and the like. The measurement results may be output to the control section 110.

The communication path interface 140 may perform transmission/reception (backhaul signaling) of a signal with an apparatus included in the core network 30 (for example, a network node providing an NF) or other base stations 10, and the like, and acquire or transmit user data (user plane data), control plane data, and the like for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may determine a combination of a plurality of demodulation reference signal (DMRS) ports for an uplink shared channel involving a plurality of repetitions using a same frequency resource and a same time resource. The transmitting/receiving section 120 may transmit downlink control information for scheduling the uplink shared channel.

The control section 110 may determine a combination of a plurality of demodulation reference signal (DMRS) ports for an uplink shared channel with a rank greater than 4. The transmitting/receiving section 120 may transmit downlink control information for scheduling the uplink shared channel.

### (User Terminal)

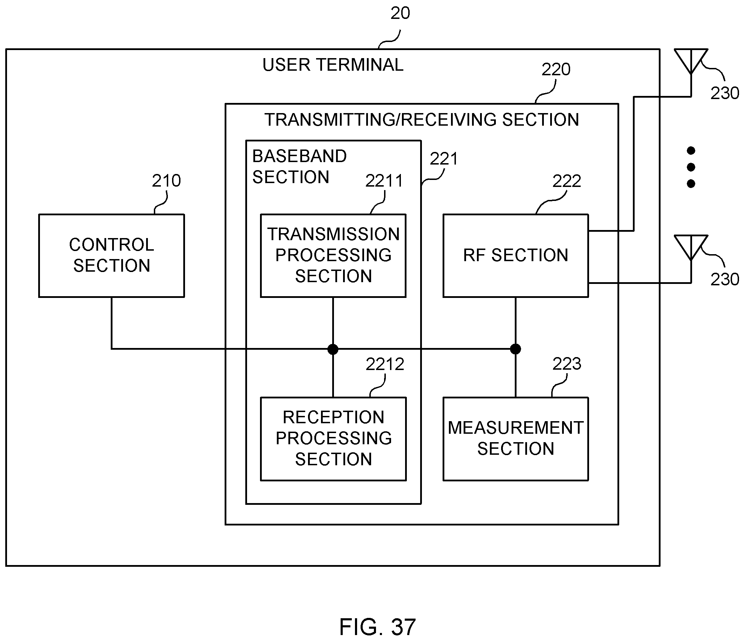

FIG. 37 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and the like. The control section 210 may control transmission/reception, measurement, and the like using the transmitting/receiving section 220, and the transmitting/receiving antennas 230. The control section 210 generates data, control information, a sequence, and the like to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmit beam and a receive beam by using digital beam forming (for example, precoding), analog beam forming (for example, phase rotation), and the like.

The transmitting/receiving section 220 (transmission processing section 2211) may perform the processing of the PDCP layer, the processing of the RLC layer (for example, RLC retransmission control), the processing of the MAC layer (for example, HARQ retransmission control), and the like, for example, on data and control information, and the like acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and the like, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and the like, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and the like, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and the like, on the acquired baseband signal, and acquire user data, and the like.

The transmitting/receiving section 220 (measurement section 223) may perform the measurement related to the received signal. For example, the measurement section 223 may perform RRM measurement, CSI measurement, and the like, based on the received signal. The measurement section 223 may measure a received power (for example, RSRP), a received quality (for example, RSRQ, SINR, SNR), a signal strength (for example, RSSI), channel information (for example, CSI), and the like. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information for scheduling the uplink shared channel involving a plurality of repetitions using the same frequency resource and the same time resource. The control section 210 may determine a combination of a plurality of demodulation reference signal (DMRS) ports, based on the downlink control information.

The combination may include a plurality of ports from a plurality of code division multiplexing (CDM) groups.

The combination may depend on an antenna coherence assumption.

The combination may be associated with a plurality of panels.

The transmitting/receiving section 220 may receive downlink control information for scheduling an uplink shared channel with a rank greater than 4. The control section 210 may determine a combination of a plurality of demodulation reference signal (DMRS) ports, based on the downlink control information.

The combination may include a plurality of ports from a plurality of code division multiplexing (CDM) groups.

The combination may depend on an antenna coherence assumption.

The combination may be associated with a plurality of panels.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

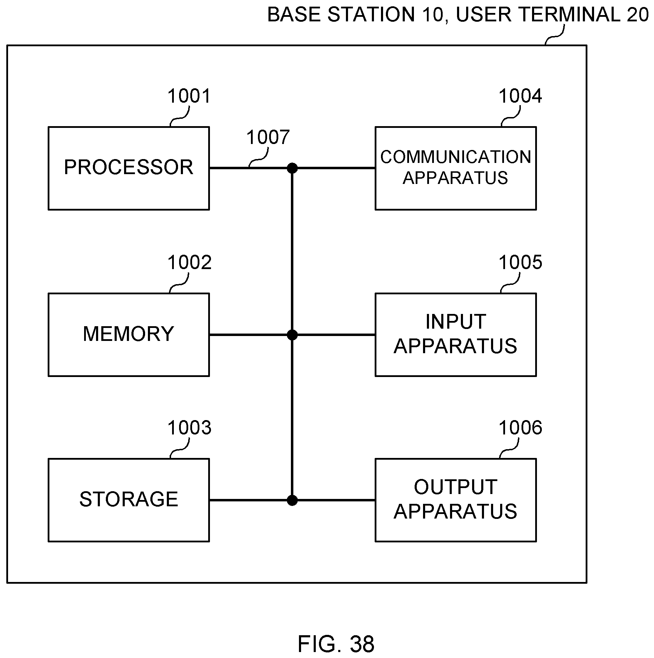

For example, a base station, a user terminal, and so on according to one embodiment of the present disclosure may function as a computer that executes the processes of the radio communication method of the present disclosure. FIG. 38 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware (these hardware).

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

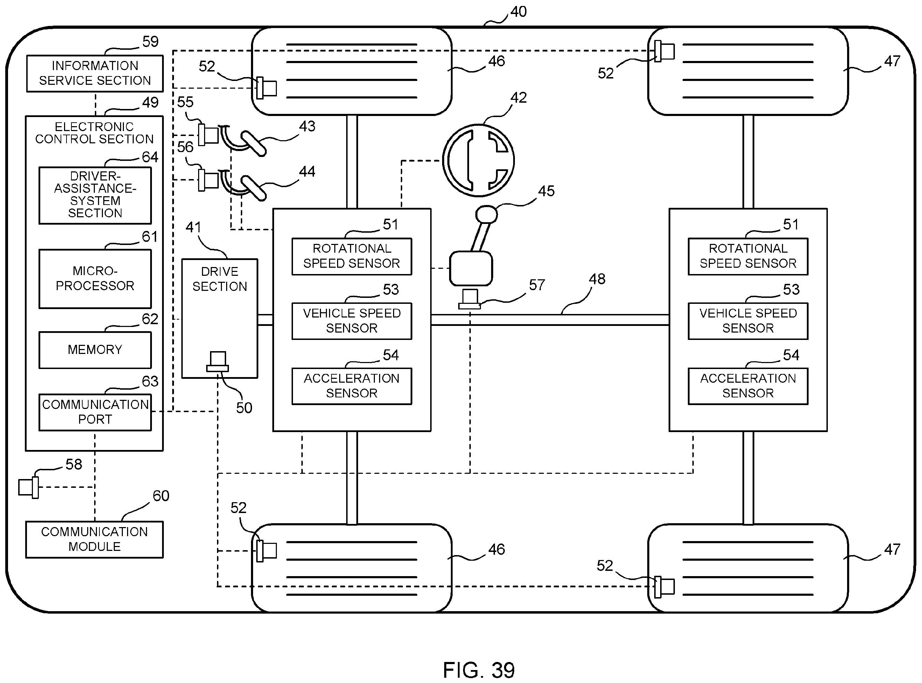

FIG. 39 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information (various information) such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-168370, filed on October 20, 2022, the contents of which are incorporated herein by reference in their entirety.

## Claims

1. A terminal comprising:
a receiving section that receives downlink control information for scheduling an uplink shared channel involving a plurality of repetitions using a same frequency resource and a same time resource; and
a control section that determines a combination of a plurality of demodulation reference signal (DMRS) ports, based on the downlink control information.

2. The terminal according to claim 1, wherein
the combination includes a plurality of ports from a plurality of code division multiplexing (CDM) groups.

3. The terminal according to claim 1, wherein
the combination depends on an antenna coherence assumption.

4. The terminal according to claim 1, wherein
the combination is associated with a plurality of panels.

5. A radio communication method for a terminal, the radio communication method comprising:
receiving downlink control information for scheduling an uplink shared channel involving a plurality of repetitions using a same frequency resource and a same time resource; and
determining a combination of a plurality of demodulation reference signal (DMRS) ports, based on the downlink control information.

6. A base station comprising:
a control section that determines a combination of a plurality of demodulation reference signal (DMRS) ports for an uplink shared channel involving a plurality of repetitions using a same frequency resource and a same time resource; and
a transmitting section that transmits downlink control information for scheduling the uplink shared channel.
